(19) Europäisches Patentamt
European Patent Office
Office européen des brevets

(11)  **EP 1 652 289 B1**

(12)  **EUROPÄISCHE PATENTSCHRIFT**

(45) Veröffentlichungstag und Bekanntmachung des Hinweises auf die Patenterteilung:
**31.08.2011  Patentblatt 2011/35**

(51) Int Cl.:
***H02P 21/00*** *(2006.01)*

(21) Anmeldenummer: 04763273.2

(22) Anmeldetag: **15.07.2004**

(86) Internationale Anmeldenummer:
**PCT/EP2004/007925**

(87) Internationale Veröffentlichungsnummer:
**WO 2005/018086 (24.02.2005 Gazette 2005/08)**

(54) **VERFAHREN ZUR GESTEUERTEN EINPRÄGUNG EINES STÄNDERSTROM- UND EINES DREHMOMENT-SOLLWERTES FÜR EINE STROMRICHTERGESPEISTE DREHFELDMASCHINE**

METHOD FOR THE CONTROLLED APPLICATION OF A STATOR-CURRENT TARGET VALUE AND A TORQUE TARGET VALUE FOR A POLYPHASE MACHINE THAT IS SUPPLIED BY AN ELECTRONIC POWER CONVERTER

PROCEDE POUR APPLIQUER DE MANIERE COMMANDEE UNE VALEUR THEORIQUE DE COURANT ROTORIQUE OU DE COUPLE DE ROTATION POUR UN GENERATEUR A INDUCTION ALIMENTE PAR CONVERTISSEUR

(84) Benannte Vertragsstaaten:
**AT BE BG CH CY CZ DE DK EE ES FI FR GB GR HU IE IT LI LU MC NL PL PT RO SE SI SK TR**

(30) Priorität: **06.08.2003  DE 10336068**

(43) Veröffentlichungstag der Anmeldung:
**03.05.2006  Patentblatt 2006/18**

(73) Patentinhaber: **SIEMENS AKTIENGESELLSCHAFT**
**80333 München (DE)**

(72) Erfinder:
• **HOFFMANN, Frank**
  **91315 Höchstadt (DE)**
• **SPERR, Franz**
  **91325 Adelsdorf (DE)**
• **STANKE, Georg**
  **91088 Bubenreuth (DE)**

(56) Entgegenhaltungen:
• **HORSTMANN D ET AL: "DIE STROMRICHTERNAHE ANTRIEBSREGELUNG DES STEUERGERAETES FUER BAHNAUTOMATISIERUNGSSYSTEME SIBAS 32" ELEKTRISCHE BAHNEN, OLDENBOURG VERLAG. MUNCHEN, DE, Bd. 90, Nr. 11, 1. November 1992 (1992-11-01), Seiten 344-350, XP000311285 ISSN: 0013-5437 in der Anmeldung erwähnt**
• **JAENECKE M ET AL: "DIREKTE SELBSTREGELUNG, EIN NEUARTIGES REGELVERFAHREN FUER TRAKTIONSANTRIEBE IM ERSTEINSATZ BEI DIESELELEKTRISCHEN LOKOMOTIVEN" ELEKTRISCHE BAHNEN, OLDENBOURG VERLAG. MUNCHEN, DE, Bd. 89, Nr. 3, März 1991 (1991-03), Seiten 79-87, XP000200273 ISSN: 0013-5437 in der Anmeldung erwähnt**
• **BAADER U ET AL: "DIRECT SELF CONTROL (DSC) OF INVERTER-FED INDUCTION MACHINE: A BASIS FOR SPEED CONTROL WITHOUT SPEED MEASUREMENT" 1. Mai 1992 (1992-05-01), IEEE TRANSACTIONS ON INDUSTRY APPLICATIONS, IEEE INC. NEW YORK, US, PAGE(S) 581-588 , XP000306107 ISSN: 0093-9994 das ganze Dokument**

Printed by Jouve, 75001 PARIS (FR)

**Beschreibung**

Die Erfindung bezieht sich auf ein Verfahren zur gesteuerten Einprägung eines Ständerstrom-Sollwertes und einen Drehmoment-Sollwertes für eine stromrichtergespeiste Drehfeldmaschine.

Zur Speisung von Drehfeldmaschinen, deren Moment sich in einem weiten Drehzahlbereich hochdynamisch auf gewünschte Werte einstellen lässt, werden meist Pulswechselrichter mit konstanter Eingangsspannung eingesetzt, häufig in Verbindung mit einem' feldorientierten Regelungsverfahren. Solch ein Antriebssystem genügt normalerweise auch den höchsten technischen Ansprüchen an die Regelgüte. Unter der Voraussetzung von in jeder gewünschten Weise einprägbaren Klemmenströmen können im Prinzip der Magnetfluss und das Drehmoment einer Drehfeldmaschine ständig auf gewünschte Werte eingestellt werden, allerdings nur dann, wenn alle elektromagnetischen Systemparameter eines hinreichend genauen Beschreibungsmodells der Maschine bekannt sind. Mit Hilfe eines Signalverarbeitungssystems können dann - ausgehend von den Messgrößen der Klemmenströme und der Drehzahl - in Abhängigkeit von einer Sollgröße, z.B. für das Drehmoment, fortlaufend die zugehörigen Klemmenspannungen bestimmt werden. Bei besonders hohen dynamischen Anforderungen an die Regelung der Drehfeldmaschine muss die Pulsfrequenz ebenfalls groß gemacht werden. Dies wirkt sich ungünstig auf den Wirkungsgrad und die Kosten des Wechselrichters aus.

Traktionsstromrichter für Schienenfahrzeuge erlauben wegen der hohen Leistungsdichte und Effizienzanforderungen keine hohe Schaltfrequenz. Beispielsweise liegt die Schaltfrequenz im Spannungsstellbereich nur im Bereich von 300Hz - 800 Hz bei Lokomotiven, Triebzügen und schweren Nahverkehrszügen und 800Hz - 2kHz im leichten Nahverkehr. Daneben muss die verfügbare Zwischenkreisspannung optimal ausgenutzt werden, d.h., aus regelungstechnischen Gründen darf keine Spannungsreserve gefordert werden. Zur Vermeidung von unzulässigen Netzrückwirkungen muss das stationäre Oberschwingungsspektrum definiert und beeinflussbar sein. Dies erfordert zusammen mit der beschränkten Schaltfrequenz und maximaler Aussteuerbarkeit synchrone Taktverfahren für den Pulswechselrichter.

Die dynamischen Anforderungen an Traktionsumrichter sind ebenfalls hoch. Sowohl das Störverhalten, beispielsweise bei Fahrleitungsspannungssprüngen, als auch das Führungsverhalten, beispielsweise die gewünschte hohe Drehmomentdynamik, für die Beherrschung von Gleit- und Schleudervorgängen, sowie von mechanischen Antriebsschwingungen, muss gegenüber normalen stationären Antrieben hochdynamisch sein.

Darüber hinaus muss die projektierte maximale Strombelastung des Umrichters genau eingehalten werden, um eine Überdimensionierung des Leistungsteils zu vermeiden. Auch bei Stör- und Führungsgrößenänderungen muss der vorgegebene Strom durch das Regelverfahren eingeprägt werden können.

Deshalb ist ein Regelverfahren mit Einprägung des Ständerstromes erforderlich. Dieses ermöglicht zugleich optimales stationäres und dynamisches Verhalten für die Vorgabe des Drehmomentes.

Eine genaue und hochdynamische Regelung des Ständerstroms direkt scheiterte bisher an den durch die Taktung verursachten erheblichen Oberschwingungen und den für Oberschwingungen stark nichtlinearen Maschinenparametern (Streuinduktivität und Hauptinduktivität).

Aus der Veröffentlichung "Die stromrichternahe Antriebsregelung des Steuergerätes für Bahnautomatisierungssysteme SIBAS 32", abgedruckt in der DE-Zeitschrift "eb - Elektrische Bahnen", Band 90 (1992), Heft 11, Seiten 344 bis 350, ist eine stromrichternahe Antriebsregelung für Asynchronmaschinen nach dem Verfahren der Feldorientierung mit den wesentlichen Funk-tionen Messwerterfassung, Flussmodell, Regelstruktur sowie Steuersatz bekannt.

Für die Antriebsregelung nach dem bewährten Verfahren der Feldorientierung ist die Erfassung von analogen Messgrößen erforderlich. Gemessen werden zwei Maschinenströme und die Eingangsspannung des Pulswechselrichters auch Zwischenkreisspannung genannt. In einer Variante werden auch zwei Leiterspannungen gemessen. Als weitere Messgröße wird die Motordrehzahl erfasst. Speist ein Wechselrichter zwei parallel ge-schaltete Fahrmotoren, so werden beide Motordrehzahlen erfasst und für die Regelung der arithmetische Mittelwert benutzt.

Grundlage der feldorientierten Regelung ist die Kenntnis des Betrages und der Winkellage des Rotorflusses. Da diese Größen nicht direkt messbar sind, werden im allgemeinen Rechenmodelle eingesetzt, welche die innere Struktur der Asynchronmaschine nachbilden. Zur Bestimmung des Rotorflusses aus den gemessenen Istwerten Spannung, Strom- und Drehzahl dient ein Flussmodell. Es besteht aus zwei bekannten Teilmodellen der Asynchronmaschine nämlich dem Spannungsmodell und dem Strommodell. Bei kleinen Drehzahlen überwiegt der Einfluss des Strommodells, wogegen bei größeren der des Spannungsmodells überwiegt. Die verwendete Struktur vereinigt damit die Vor-teile beider Teilmodelle und kann als ein vom Strommodell geführtes Spannungsmodell aufgefasst werden. Das Strommodell enthält den Parameter Rotorzeitkonstante. Während des Betriebes ändert sich der Rotorwiderstand der Maschine stark mit der Rotortemperatur. Die Kenntnisse des aktuellen Rotorwider-standes ist demnach für ein genaues Arbeiten des Strommodells erforderlich.

Die zentrale Aufgabe des Signalprozessorsystems liegt in der Ansteuerung des Pulswechselrichters, so dass der Fahrmotor den geforderten Sollwerten folgt. Die beiden Leiterspannungen sowie die drei Maschinenströme werden in Koordinatenwandlern in zwei orthogonale Komponenten umgerechnet. Mit dem Flusswinkel werden nun die beiden orthogonalen Stromkomponenten vom statorfesten Koordinatensystem in ein mit dem Rotorfluss-raumzeiger umlaufende System transformiert, also die Feldorientierung der Stromkomponenten vorgenommen. Nach einer Filterung liegen dann die Istwerte der feldbildenden und der momentenbildenden Stromkomponente vor. In einem stationären Betriebspunkt sind diese Stromkomponenten Gleichgrößen.

Um nun aus den Führungsgrößen Sollfluss und Sollmoment die Regelungsausgangsgrößen zu ermitteln, wird üblicherweise die inverse Struktur der Asynchronmaschine in einer sogenannten Entkopplungsschaltung nachgebildet. Sie berechnet aus dem Flusssollwert, dem der Magnetisierungskennlinien entnommenen Magnetisierungsstromsollwert, dem Wirkstromsollwert und der Winkelgeschwindigkeit des Rotorflusses die benötigten Spannungskomponenten. Zur Stabilisierung werden zwei Stromregler für die feldbildende und die momentenbildende Stromkomponente zu den Ausgängen der Entkopplung addiert.

Die Anpassung der Regelung an die aktuelle Zwischenkreisspannung wird im Steuersatz vorgenommen. Aus der Sollspannung und dem Istwert der Zwischenkreisspannung wird der Aussteuergrad für den Pulsbreitenmodulator berechnet. Es ist die Aufgabe des Steuersatzes durch abwechselndes Umschalten der drei Wechselrichterzweigpaare am Motor die geforderte, in Frequenz und Amplitude einstellbare Spannungsgrundschwingung zu erzeugen.

Die Schaltzeiten werden je nach Betriebszustand nach zwei unterschiedlichen Modulationsverfahren berechnet. Bei kleinen Frequenzen und Spannungen im Bereich des Anfahrens und kleiner Geschwindigkeit wird asynchrone sinusförmige Modulation verwendet. Da hier viele Umschaltungen auf eine Periode der Grundfrequenz kommen, müssen die Schaltzeiger und die dazugehörigen Schaltwinkel on-line vom Prozessor bestimmt werden. Erreicht das Verhältnis von Schalt- zu Grundfrequenz, die sogenannte Pulszahl, einen Wert von etwa 10 bis 8, muss der Wechselrichter synchron zur Grundfrequenz getaktet werden. Mit steigender Grundfrequenz muss infolge der begrenzten Schaltfrequenz des Wechselrichters die Pulszahl stufenweise verkleinert werden. Hier werden off-line optimierte Pulsmuster verwendet. Wichtigstes Optimierungskriterium ist der Effektivwert des Oberschwingungsstromes, da dieser hauptsächlich die zusätzlichen Verluste im Motor durch die Umrichterspeisung verursacht.

Als zweiter Schritt nach der Optimierung ist deshalb die Pulsmusterauswahl durchzuführen. Dabei wird für die Auswahl des geeigneten Pulssystems für den Prozessor ein Kennfeld erstellt, in dem für alle möglichen diskreten Werte von Grundfrequenz und Aussteuergrad das am besten geeignete Pulsmuster eingetragen ist, das die Randbedingung maximale Schaltfrequenz und Einhaltung der minimalen Pulsbreite sowie des maximalen Stromspitzenwertes erfüllt. Die Pulsmusterauswahlebene sowie die für jedes Pulssystem und jeden Aussteuergrad off-line optimierten Pulswinkel sind in der Signalprozessoreinheit in Tabellenform gespeichert. Im Programmmodulsteuersatz werden zuerst aus der Auswahlebene die Modulationsart und das Pulssystem bestimmt, das zudem von der Regelung geforderten Betriebspunkt gehört. Im Bereich der optimierten Muster sind aus den für den betreffenden Aussteuergrad gespeicherten Schaltwinkeln die Schaltzeiten in Abhängigkeit der momentanen Statorfrequenz zu berechnen. Bei Pulssystemwechseln müssen die Zeitpunkte so gewählt werden, dass keine Ausgleichsvorgänge oder unerwünschten Stromspitzen auftreten.

Mit diesem sogenannten Spannungssteuersatz kann die Stellgröße Spannung nur als Grundschwingung in Betrag und Winkel vorgegeben werden, die Momentanwerte der übrigen elektrischen Größen sind dann durch das Pulsmuster vorgegeben und nicht mehr on-line zu beeinflussen. Bei zu hoher Dynamik der Stellgröße treten Ausgleichsvorgänge auf, die zu starken Drehmomentschwingungen führen.

In der Veröffentlichung "Direkte Selbstregelung (DSR) für hochdynamische Drehfeldantriebe mit Stromrichterspeisung" abgedruckt in der DE-Zeitschrift "etzArchiv", Band 7 (1985), Heft 7, Seiten 211 bis 218, wird eine direkte Selbstregelung einer stromrichtergespeisten Asynchronmaschine beschrieben, die ohne Pulsbreitenmodulation arbeitet, wenig parameterempfindlich ist und außerdem sehr gute dynamische Eigenschaften aufweist. Wenn eine Drehfeldmaschine über einen dreisträngigen Wechselrichter bei konstanter Eingangsspannung gespeist wird, kann der Raumzeiger der Ständerspannung nur sieben diskrete Werte annehmen. Vernachlässigt man die im Feldschwächbereich in der Regel gegenüber der Ständerspannung kleine Spannung, die an den Kupferwiderständen der Ständerwicklungen abfällt, so bestimmt der jeweilige Augenblickswert des Spannungsraumzeigers eindeutig die Änderung der augenblicklichen Lage des Raumzeigers für den Gesamtfluss hinsichtlich Geschwindigkeit und Richtung. Bei stationärer Grundfrequenztaktung durchläuft die Spitze des Flussraumzeigers deshalb ein gleichseitiges Sechseck mit konstanter Bahngeschwindigkeit und geringfügig pulsierender Winkelgeschwindigkeit.

Bei Grundfrequenztaktung besteht die einzige Möglichkeit zur Beeinflussung des Drehmoments der Asynchronmaschine darin, die Zeitabstände zwischen den Umschaltungen des Spannungsraumzeigers zu steuern. Vernachlässigt man die stromproportionalen Spannungen am Kupferwiderstand der Ständerwicklungen, kann bei einem dreisträngigen Wechselrichter mit konstanter Eingangsgleichspannung die Bahngeschwindigkeit sehr einfach auf den Wert Null verringert werden, nämlich durch Einschaltung des siebten Maschinenspannungsraumzeigers, dessen Betrag den Wert Null hat. Über ein Pulsspiel bestehend aus einen ersten Teilintervall mit unverminderter Bahngeschwindigkeit des Flussraumzeigers und einem zweiten Intervall mit gegenüber den Ständerachsen stillstehenden Flussraumzeigers, kann durch die Wahl der Dauer beider Teilintervalle bekanntlich jeder beliebige Zwischenwert der für das Pulsspiel gemittelten Bahngeschwindigkeit eingestellt werden.

Die Signalverarbeitung für die direkte Flussselbstregelung weist einen Fluss- und einen Momentenvergleicher auf. Aus den gemessenen Spannungswerten vermindert um einen Spannungsabfall an den Kupferwiderständen der Ständerwicklungen der Asynchronmaschine wird mittels eines Integrators orthogonale Komponenten des Ständerflusses generiert, die in Flussgrößen einer jeden Ständerwicklungsachse der Asynchronmaschine gewandelt werden. Diese Flussgrößen werden jeweils mit einer Flussführungsgröße verglichen, die von einer Drehmomentregelung abgeleitet werden kann. Im Grunddrehzahlbereich ergibt sich dann eine sehr einfache Regelung nach folgender Vorschrift:

Übersteigt der Istwert des Moments den Sollwert um mehr als eine zugelassene Toleranz, so ist anstelle des durch die Flussselbstregelung aus den sechs äußeren Raumzeigerwerten der Maschinenspannung bestimmten aktuellen Raumzeigerwerts der siebte Raumzeigerwert mit dem Betrag Null solange einzuschalten, bis der Istwert des Moments den Sollwert um mehr als die zugelassene Toleranz unterschreitet. Danach bestimmt wieder die Flussselbstregelung den Schaltzustand des Wechselrichters. Der siebte Spannungsraumzeigerwert mit dem Betrag Null kann bekanntlich durch zwei verschiedene Schaltzustände bewirkt werden. Durch entsprechende Auswahlkriterien lassen sich Nebenbedingungen erfüllen, z.B. minimale Schalthäufigkeit, Gewährleistung von Schaltzustand-Minimalzeiten.

Auf diese beschriebene Weise stellt sich die über ein Pulsspiel gemittelte Winkelgeschwindigkeit des rotierenden Anteils der resultierenden Flussverkettung selbständig auf den zur Erzeugung des gewünschten Drehmoments erforderlichen Wert ein, und zwar ohne jede Information über die Wellendrehzahl und über aktuelle Werte von Induktivitäten, Rotorwiderstand sowie über andere Größen und Parametern, die bei einem feldorientierten Regelungsverfahren bekannt sein müssen. Die in der Regel immer vorhandenen langsamen und schnellen Schwankungen der Eingangsgleichspannung des Wechselrichters werden durch die direkte Selbstregelung automatisch berücksichtigt und bleiben so ohne Auswirkung auf das in einem vorbestimmten Toleranzband geführte Drehmoment.

Diese direkte Selbstregelung ist für einen Traktionsantrieb geeignet und liefert ein optimales dynamisches Verhalten, allerdings kein reproduzierbares stationäres Verhalten. Außerdem erlaubt diese direkte Selbstregelung kein zu kleines Verhältnis von Schalt- zu Grundfrequenz.

In der Veröffentlichung "Direkte Drehmomentregelung von Drehstromantrieben", abgedruckt in der DE-Zeitschrift "ABB Technik", Nr. 3, 1995, Seiten 19 bis 24, wird eine neuentwickelte direkte Drehmomentregelung vorgestellt. Diese direkte Drehmomentregelung, auch als Direct Torque Control (DTC) bezeichnet, basiert auf den Theorien der feldorientierten Regelung von Asynchronmaschinen und der direkten Selbstregelung. Bei der direkten Drehmomentregelung sind Motor und Wechselrichter weitgehend integriert. Alle Schaltvorgänge des Wechselrichters sind vom elektromagnetischen Zustand des Motors abhängig. Wie bei Gleichstrommaschinen ermöglicht die DTC eine getrennte Regelung von Fluss- und Drehmoment. Ein Pulsweitenmodulator zwischen Motor und Wechselrichtersteuerung wird nicht benötigt.

Kerneinheiten des DTC-Systems sind die Baueinheiten zur Hystereseregelung von Drehmoment und magnetischen Fluss sowie die Logikeinheit zur Schaltoptimierung. Ein anderer wichtiger Bestandteil des Systems ist das genaue Motormodell. Das Motormodell erzeugt durch Messungen zweier Motorströme und der Spannung im Gleichstrom-Zwischenkreis Istwert-Signale von Drehmoment, Ständerfluss, Frequenz und Wellendrehzahl. Die Sollwerte für Drehmoment und Fluss werden mit den Istwerten verglichen, und durch Zweipunktregelung der Hysterese werden die Stellsignale erzeugt. Die Logik zur Schaltoptimierung ermittelt anhand der Sollwerte für Drehmoment und Fluss den besten Spannungsvektor. Die Regelung des Ständerflusses erfolgt über die Ausgangsspannung des Wechselrichters. Bei der DTC werden Ständerfluss und Drehmoment innerhalb der Hysteresegrenze gehalten, also innerhalb des gewählten Toleranzbandes. Die Zustandssollwerte werden nur dann geändert, wenn die Istwerte von Drehmoment und Ständerfluss mehr als um die erlaubte Hysterese von ihren Sollwerten abweichen. Wenn der rotierende Ständerflussvektor die obere oder untere Hysteresegrenze erreicht, wird ein geeigneter Spannungsvektor dazu benutzt, die Richtung des Ständerflusses zu ändern und ihn damit innerhalb des Hysteresebandes zu halten. Das erforderliche Drehmoment erzielt man durch die Regelung des Ständerflussvektors.

Auch diese direkte Drehmomentregelung liefert ein optimales dynamisches Verhalten wie die direkte Selbstregelung. Jedoch ist das stationäre Verhalten nicht reproduzierbar und diese direkte Drehmomentregelung erlaubt auch kein zu kleines Verhältnis von Schalt- zu Grundfrequenz.

In der Veröffentlichung "Direkte Selbstregelung, ein neuartiges Regelverfahren für Traktionsantriebe im Ersteinsatz bei dieselelektrischen Lokomotiven", abgedruckt in der DE-Zeitschrift "eb - Elektrische Bahnen", Band 89 (1991), Heft 3, Seiten 79 bis 87, ist eine Realisierung der direkten Selbstregelung (DSR) beschrieben.

Der Erfindung liegt nun die Aufgabe zugrunde, ein Verfahren zur gesteuerten Einprägung eines Ständerstrom- und eines Drehmoment-Sollwertes anzugeben, das die Nachteile der bekannten Verfahren vermeidet, sowie die Erweiterung des Einsatzbereiches auf Synchronmaschinen erlaubt.

Diese Aufgabe wird erfindungsgemäß mit den Merkmalen des Anspruchs 1 gelöst.

Durch dieses erfindungsgemäße Verfahren wird die feldorientierte Regelung mit einem Spannungszeitflächen-Steuersatz für off-line optimierte Pulsmuster kombiniert. D.h., als Stellgröße wird keine Ständerspannung mehr vorgegeben, sondern deren Integral, also Spannungszeitflächen. Da diese Spannungszeitflächen die Dimension eines Flusses haben, wird diese Spannungszeitfläche anschaulicher als Klemmenfluss bezeichnet. Somit wird aus einem Spannungssteuersatz ein Spannungszeitflächen-Steuersatz, mit dem eine ausgewählte Flussbahnkurve stationär und dynamisch genau nachgefahren werden kann, um damit die Lage eines ermittelten Klemmenflusses zum Rotorfluss einer Drehfeldmaschine sowohl nach Betrag als auch nach Winkel unmittelbar mit jeder möglichen Schalthandlung einzustellen.

Im stationären Zustand ist somit aufgrund der stationär exakten Vorsteuerung mit dem Klemmenfluss auch der Ständerfluss und damit das Drehmoment eingeprägt, das aus der Lage von Ständerfluss zum Rotorfluss bestimmt ist. Außerdem wird durch diese Vorsteuerung des Klemmenflusses der Ständerstrom indirekt eingeprägt, wodurch die Nachteile einer direkten Stromregelung vermieden werden.

Da bei synchroner Taktung die zeitkontinuierliche Differentiation des Flusses zur Spannung zur Erreichung einer stationär und dynamisch richtigen Vorsteuerung nicht möglich ist, wird aufgrund der Erkenntnis dieser Erfindung diese in den zeitdiskreten, pulssynchronen Steuersatz verlagert. Dadurch ist die Eingangsgröße des Steuersatzes dann nicht mehr die Spannung, sondern ihr Integral über der Zeit, was einer Spannungszeitfläche entspricht, die in dem jeweiligen diskreten Abtastintervall vom Steuersatz realisiert werden soll. Die Verschiebung der Differentiation des Klemmenflusses in den Steuersatz bedingt weitergehende Änderungen in der Behandlung und Ausgabe der optimierten Pulsmuster im Steuersatz.

Bei einem vorteilhaften Verfahren wird der Klemmenfluss über einen Umweg über die Berechnung der stationären Ständerspannung ermittelt. Dadurch erhält man gleichzeitig einen Aussteuergrad, der bei der Auswahl eines Pulsmusters verwendet werden kann. Im Feldschwächbereich muss der Aussteuergrad begrenzt werden, die durch den Umweg über die Ständerspannung nun vorgenommen werden kann.

Bei einem weiteren vorteilhaften Verfahren wird ein Istwert des Klemmenflusses bestimmt, der bei der dynamischen Führung eines ermittelten Klemmenflusses auf einer ausgewählten Flussbandkurve verwendet wird. Dadurch werden Abweichungen, die Ausgleichsvorgänge zur Folge haben können, weitgehend kompensiert. Damit wird die dynamische Abweichung vom Ständerfluss auf den Klemmfluss verschoben, wodurch ein Drehmoment-Sollwert auch dynamisch eingeprägt werden kann. Mit der Einprägung eines Drehmoment-Sollwertes ist die Lage des Ständerflusses zum Rotorfluss exakt eingeprägt, wodurch auch der Ständerstrom bestimmt ist. Somit wird ein Sollwert eines Ständerstromes ebenfalls dynamisch indirekt eingeprägt.

Zur weiteren Erläuterung der Erfindung wird auf die Zeichnung Bezug genommen, in der das erfindungsgemäße Verfahren schematisch veranschaulicht ist.

FIG 1    zeigt eine Struktur einer gesamten Antriebsregelung ei- ner Drehfeldmaschine ohne Drehzahlgeber, in der

FIG 2    ist ein Zeigerdiagramm einer Asynchronmaschine im ro- torflussfesten Koordinatensystem veranschaulicht, die

FIG 3    zeigt eine vereinfacht dargestellte Regelstrecke einer Asynchronmaschine, die

FIG 4    zeigt eine Spannungsvorsteuerung einer Asynchronmaschi- ne rotorflussorientiert, in der

FIG 5    ist eine Struktur der Vorsteuerung für einen Spannungs- steuersatz dargestellt, wogegen in der

FIG 6    eine Struktur der Vorsteuerung für einen Spannungszeit- flächensteuersatz veranschaulicht ist, die

FIG 7    zeigt die möglichen Ausgangsspannungen eines Pulswech- selrichters im statorfesten Raumzeigerkoordinatensys- tem, in der

FIG 8    ist ein Klemmenflussverlauf in einem Sektor mit Fluss- betrags- und Winkelschwellen dargestellt, die

FIG 9    zeigt die Realisierung eines vorteilhaften Verfahrens nach der Erfindung, in der

FIG 10   ist eine Realisierung eines Fluss- und Drehmomentreg- lers nach FIG 9 veranschaulicht, die

FIG 11   zeigt eine Realisierung der Vorsteuerung nach FIG 9, in der

FIG 12   ist ein Blockschaltbild einer Einrichtung zur Berech- nung eines Klemmenfluss-Istwertes näher dargestellt, die

FIG 13   zeigt die Struktur eines Spannungszeitflächen- Steuersatzes im Grunddrehzahlbereich, die

FIG 14   veranschaulicht die Funktion einer Bahnkurvenabkürzung bei Vollblock, die

FIG 15   veranschaulicht die Funktion einer Bahnkurvenabkürzung bei einem Flankenpulsmuster, wogegen die

FIG 16   die Lage der Nullzeiger bei dynamischer Bahnkurvenab- kürzung veranschaulicht und in der

FIG 17   ist eine Struktur eines Spannungszeitflächen- Steuersatzes im Grunddrehzahl- und Feldschwächbereich dargestellt.

Um die Übersichtlichkeit zu gewährleisten, wird das erfindungsgemäße Verfahren im folgenden am Beispiel der Asynchronmaschine dargestellt.

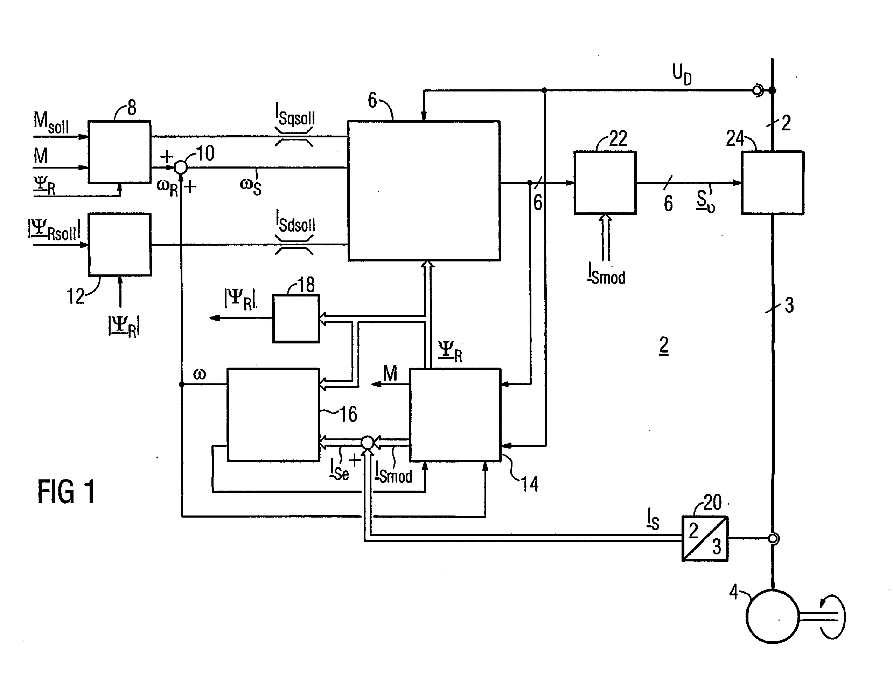

In der FIG 1 ist eine Struktur der gesamten Antriebsregelung 2 einer Drehfeldmaschine 4 ohne Drehzahlgeber dargestellt. Die Einrichtung 6, insbesondere ein Mikroprozessor, ist für die Durchführung eines wesentlichen Teils des erfindungsgemäßen Verfahrens verantwortlich. Mittels dieser Einrichtung 6 wird aus ermittelten Stromkomponenten $I_{sqsoll}$ und $I_{Sdsoll}$ und einer ermittelten Ständerkreisfrequenz $\omega_s$ als Stellgröße eine Spannungszeitfläche, die hier als Klemmenfluss $\underline{\Psi}_{Ksoll}$ bezeichnet wird, berechnet. Die drehmomentbildende Stromkomponente $I_{Sqsoll}$ eines einzuprägenden Ständerstrom-Sollwertes $I_{Ssoll}$ wird mittels eines Drehmomentreglers 8 in Abhängigkeit eines Drehmoment-Sollwertes $M_{soll}$, eines ermittelten Rotorfluss-Istwertes $\underline{\Psi}_R$ und eines Drehmoment-Istwertes M berechnet. Außerdem erhält man am Frequenz-Ausgang dieses Drehmomentreglers 8 eine Rotorschlupffrequenz $\omega_R$, die mittels eines Addierers 10 mit einer berechneten Kreisfrequenz $\omega$, die proportional zur mechanischen Drehzahl der Drehfeldmaschine 4 ist, verknüpft. Zur Bestimmung der flussbildenden Stromkomponente $IS_{dsoll}$ des einzuprägenden Ständerstrom-Sollwertes $I_{Ssoll}$ ist ein Flussregler 12 vorgesehen. Deren Eingängen steht ein vorbestimmter Rotorfluss-Sollwert $\underline{\Psi}_{Rsoll}$ und ein ermittelter Rotorfluss-Istwert $\underline{\Psi}_R$ an. Diese beiden Stromkomponenten $I_{Sdsoll}$ und $I_{Sqsoll}$ sind Komponenten eines rotorflussfesten Koordinatensystem d, q. Der Drehmoment- und Flussregler 8 und 12 sind aus der feldorientierten Regelung hinreichend bekannt. Außerdem sind aus der feldorientierten Regelung die weiteren Einrichtungen 14, 16 und 18 bekannt. Mit 14 ist ein Motormodell, mit 16 eine Drehzahl- und Parameteradaption und mit 18 ein Betragsbildner bezeichnet. Mittels der Einrichtung 16 werden ein Drehzahlwert und Parameterwerte der Drehfeldmaschine 4, wie Ständerwiderstand $R_s$, Streuinduktivität $L_\sigma$ und Hauptinduktivität $L_h$ berechnet. Dazu wird einerseits ein Rotorfluss-Istwert $\underline{\Psi}_R$ und andererseits eine Ständerstrom-Differenz $I_{se}$, die aus einem Ständerstrom-Modellwert $I_{smot}$ und einem Ständerstrom-Istwert $\underline{I}_s$, der am Ausgang eines Koordinatenwandlers 20 ansteht, verwendet. Den Ständerstrom-Modellwert $\underline{I}_{smot}$ wird von der Einrichtung 14 geliefert, die einen Rotorfluss $\underline{\Psi}_R$ und einen Drehmoment-Istwert M generiert. Dazu benötigt diese Einrichtung 14 wenigstens die Parameter und den ermittelten Drehzahl-Istwert $\omega$. Mit 22 ist ein inverses Wechselrichtermodell bezeichnet, dem der Ständerstrom-Modellwert $\underline{I}_{smot}$ zugeführt ist. Ausgangsseitig am inversen Wechselrichtermodell 22 stehen Steuersignale $S_v$ für einen lastseitigen Stromrichter 24, insbesondere einem Pulswechselrichter, an, der die Drehfeldmaschine 4 speist. Als Drehfeldmaschine 4 kann eine Asynchron- oder eine Synchronmaschine verwendet werden.

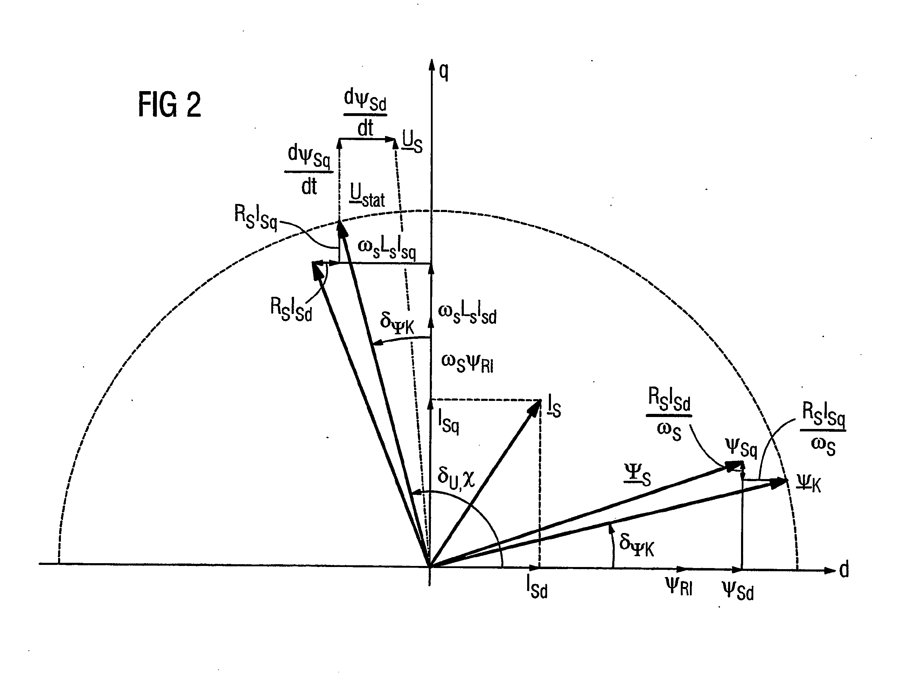

In der FIG 2 ist beispielhaft ein Zeigerdiagramm einer Asynchronmaschine in rotorflussfesten Koordinatensystem d, q veranschaulicht. Dieses Zeigerdiagramm zeigt wie gewöhnlich den Ständerspannungs-Zeiger $\underline{U}_s$ für den stationären und den dynamischen Fall. Ebenfalls ist der Ständerstrom-Zeiger $\underline{I}_s$ mit seinen orthogonalen Stromkomponenten $I_{sd}$ und $I_{sq}$ dargestellt. Neu in diesen bekannten Zeigerdiagramm sind Flusszeiger $\underline{\Psi}_K$ und $\underline{\Psi}_s$ dargestellt. Der Flusszeiger $\underline{\Psi}_K$ entspricht dem um 90° gedrehten Ständerspannungs-Zeiger $U_{Sstat}$. Somit ist dieser Flusszeiger $\underline{\Psi}_K$ das Integral des Ständerspannungs-Zeigers $\underline{U}_{Sstat}$ und wird als Klemmenfluss-Zeiger $\underline{\Psi}_K$ bezeichnet. Dieser Klemmenfluss-Zeiger $\underline{\Psi}_K$ entspricht der vektoriellen Addition des Ständerfluss-Zeigers $\underline{\Psi}_s$ und einem zum Spannungsabfall am Ständerwiderstand $R_s$ korrespondierenden Flusszeiger.

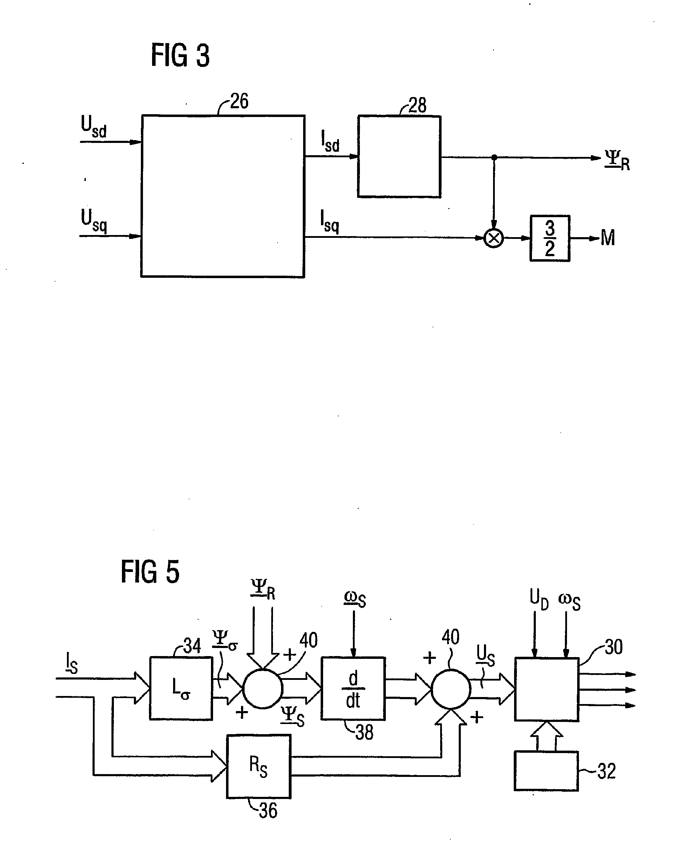

Eine stationär und dynamisch richtige Vorsteuerung muss die Struktur der Regelstrecke invers wiedergeben, um deren stationäres und dynamisches Verhalten zu kompensieren. In der FIG 3 ist prinzipiell die Aufteilung der Struktur einer Drehfeldmaschine, insbesondere einer Asynchronmaschine, mit den schnell veränderlichen elektrischen Größen der Ständermasche 26 und dem nur langsam änderbaren elektrischen Größen der Rotormasche 28 dargestellt. Die Vorsteuerung und Regelung von Rotorfluss $\underline{\Psi}_R$ und Drehmoment M (bei einer permanenterregten Synchronmaschine nur Drehmoment) kann in die langsame Vorsteuerung und Regelung des Rotorflusses $\underline{\Psi}_R$ und die hochdynamische Vorsteuerung und Regelung der feld- und momentenbildenden Stromkomponenten $I_{sd}$ und $I_{sq}$ aufgeteilt werden. Beim erfindungsgemäßen Verfahren sind nur die Vorsteuerung und Regelung der Stromkomponenten $I_{sd}$ und $I_{sq}$ über die Ständermasche 26 von Interesse. Bei einer permanenterregten Synchronmaschine ist prinzipiell nur die Ständermasche 26 vorhanden.

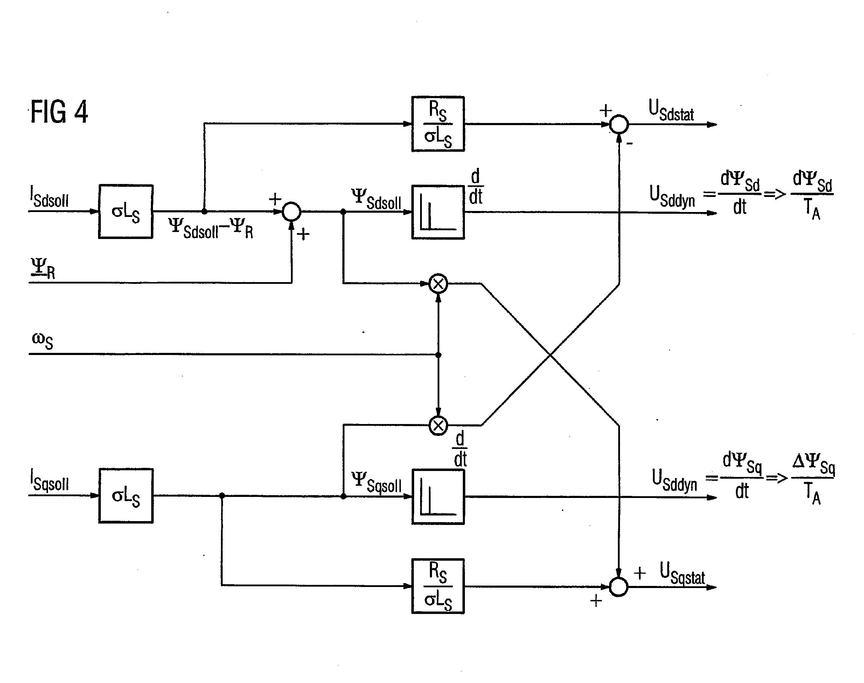

In FIG 4 ist die erforderliche Struktur der Vorsteuerung der Ständermasche 26 dargestellt. Dabei sind die Spannungskomponenten $U_{sd}$ und $U_{sq}$ in die stationären und dynamischen Anteile $U_{Sdstat}$, $U_{Sqstat}$ und $U_{Sddyn}$, $U_{Sqdyn}$ aufgeteilt. Da diese Struktur der Vorsteuerung für ein Fachmann selbstklärend ist, wird an dieser Stelle auf eine nähere Beschreibung dieser Struktur verzichtet. Die Probleme dieser Spannungsvorsteuerung resultieren aus den dynamischen Spannungskomponenten $U_{Sddyn}$ und $U_{Sqdyn}$, die aus einer Differenz des Ständerfluss-Sollwertes $\Psi_{Sdsoll}$ und $\Psi_{Sqsoll}$ bestimmt werden müssen.

Diese in der FIG 4 dargestellte Struktur der Vorsteuerung der Ständerspannung $\underline{U}_s$ kann mit einem Spannungssteuersatz zur vollständigen Struktur einer Vorsteuerung erweitert werden. Eine derartige Struktur ist in der FIG 5 schematisch dargestellt. In einem Steuersatz 30 erfolgt die Anpassung an eine momentane Zwischenkreisspannung $U_D$ sowie die Rücktransformation von flusssynchronen in ein statorfestes Koordinatensystem zur Ausgabe von Schaltzeitpunkten. In dieser Struktur der Vorsteuerung für einen Spannungssteuersatz ist mit 32 eine Pulsmustertabelle mit optimierten Pulsmustern bezeichnet, mit 34 der Parameter Streuinduktivität $L_\sigma$ mit 36 der Parameter Ständerwiderstand $R_s$ mit 38 eine Differentiations-Einrichtung und mit 40 jeweils eine Additionsstelle. Für eine dynamisch exakte Vorsteuerung muss die Frequenzabhängigkeit, nämlich die Reduzierung bei höheren Frequenzen, des Parameters Streuinduktivität $L_\sigma$ berücksichtigt werden. Gemäß dieser Struktur wird die sich aus Rotorfluss $\underline{\Psi}_R$ und durch den Ständerstrom $\underline{I}_s$ verursachten Streufluss $\underline{\Psi}_\sigma$ ergebene Zwischengröße Ständerfluss $\underline{\Psi}_s$ differenziert, um die Ständerspannung $\underline{U}_s$ zu erhalten. Dies ist bei asynchroner Modulation problemlos möglich, da in einem Schaltzyklus jeder mögliche Spannungszeiger $\underline{U}_s$ als Mittelwert eingestellt werden kann.

Der dynamische Anteil des Differenzierens von Flussänderungen kann bei synchronen Pulsmustern nicht ausreichend schnell berücksichtigt werden, da die Zeitdiskretisierung durch die Pulsmuster für eine quasikontinuierliche Behandlung zu groß ist. Dieses lässt sich dadurch erklären, dass in der synchronen Taktung die Schaltreihenfolge der Spannungsraumzeiger fest definiert ist. Dadurch kann die Spannung nicht beliebig nach Betrag und Winkel beeinflusst werden, so dass die Differentiation des Ständerflusses $\underline{\Psi}_s$ nicht in den gewünschten Ständerspannungs-Raumzeiger $\underline{U}_s$ umgesetzt werden kann. D.h., dass die Vorsteuerung bei optimierten Pulsmuster nur stationär wirken kann.

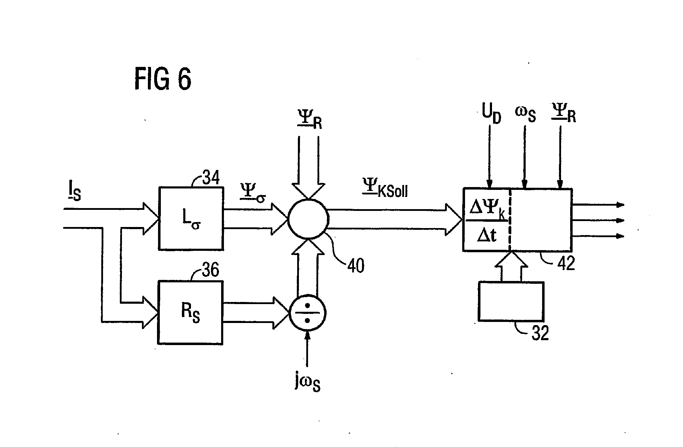

Da bei synchroner Taktung die zeitkontinuierliche Differentiation des Flusses zur Spannung zur Erreichung einer stationär und dynamisch richtigen Vorsteuerung nicht möglich ist, wird erfindungsgemäß diese in einen zeitdiskreten, pulssynchronen Steuersatz verlagert. Die Eingangsgröße eines zugehörigen Steuersatzes ist dann nicht mehr die Ständerspannung $\underline{U}_s$, sondern ihr Integral über der Zeit, also eine Spannungszeitfläche, die in dem jeweiligen diskreten Abtastintervall von einem Steuersatz 42 realisiert werden muss.' Die Struktur der Vorsteuerung für einen Steuersatz 42, der Spannungszeitflächen umsetzen muss, ist in der FIG 6 schematisch veranschaulicht. Da Spannungszeitflächen von der Dimension einen Fluss entsprechen, werden diese Spannungszeitflächen im folgenden als Klemmenfluss $\underline{\Psi}_K$ bezeichnet. Die zeitdiskrete Differentiation des Klemmenflusses $\underline{\Psi}_K$ im Steuersatz 42 muss natürlich nach der Rücktransformation in das statorfeste Koordinatensystem erfolgen. Die Bestimmung der Ein- und Ausschaltzeitpunkte der diskreten Spannungszustände auf Basis der Lage des Ständerfluss-Raumzeigers $\underline{\Psi}_s$ zum Rotorfluss-Raumzeiger $\underline{\Psi}_R$ bedingt natürlich weitgehende Änderungen in der Behandlung und Ausgabe der optimierten Pulsmuster im Steuersatz 42.

Optimierte Pulsmuster liegen als vorberechnete Schaltwinkel vor, die vom Aussteuergrad abhängig und in diskreten Schritten berechnet und abgelegt sind. Die Zwischenkreisspannung $U_D$ wird dabei für ein Abtastintervall als konstant angenommen. Die Umrechnung der Sollspannung in den Aussteuergrad a für die aktuelle Zwischenkreisspannung $U_D$ sowie von Schaltwinkeln in Schaltzeiten erfolgt im Steuersatz 42.

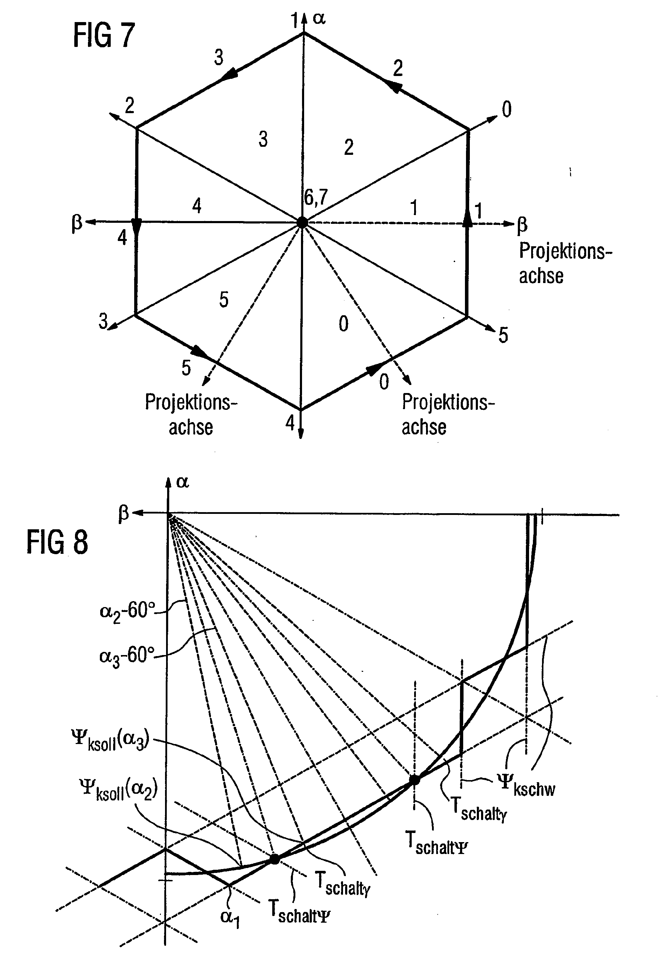

Bei einem Zweipunktwechselrichter gibt es sechs Spannungszeiger $U_0$, ...,U5 mit der Länge 2/3 $U_D$ und zwei Nullzeiger $U_6$, $U_7$ mit der Länge Null. Diese Spannungszeiger $U_0$,...,$U_7$ sind in der FIG 7 in einem statorfesten Raumzeiger-Koordinatensystem α, β dargestellt. Wenn die Spannungszeitflächen wie ein Fluss (Klemmenfluss) betrachtet werden, können sie im Raumzeigersystem ebenso wie die Spannungen $U_0$,...,$U_7$ als Zeiger beschrieben werden. Ein solcher Klemmenflusszeiger $\underline{\Psi}_K$ bewegt sich, wenn einer der sechs Spannungszeiger $U_0$,...,$U_5$ eingeschaltet ist, mit der Geschwindigkeit 2/3 $U_D$ pro Sekunde in Richtung des Spannungszeigers, bei eingeschaltetem Nullzeiger $U_6$, $U_7$ bleibt er stehen. Wenn bei Grundschwingungstaktung die Spannungszeiger $U_0$,...,$U_5$ nacheinander geschaltet werden, ergibt sich ein sechseckförmiger Verlauf des Klemmenflusszeigers $\underline{\Psi}_K$.

Die Grundidee des Spannungszeitflächen-Steuersatzes 42 ist die Zusammenlegung von stationärer und dynamischer Vorsteuerung und der Fehlerkorrektur für die Spannungszeitflächen, so dass diese eingeprägt werden.

Wenn die Spannungszeitflächen bzw. der Klemmenfluss $\underline{\Psi}_K$ sich auf der für den momentanen Zustand gültigen stationären Wert befindet, sind die primär zu regelnden Größen Drehmoment und Ständerstrom-Komponenten exakt eingestellt. Voraussetzung ist, dass der Wert stationär mit der maximal zur Verfügung stehenden Spannung realisierbar ist.

Bei synchronen Pulsmustern wird anders als bei asynchroner Modulation durch den Einsatz des Flusssteuersatzes die stationäre Spannung inklusiv Oberschwingungen vorgesteuert, obwohl die Regelung selbst natürlich auch nur Grundschwingungs-Sollwerte liefert. Aus den Grundschwingungs-Sollwerten der Regelung wird für den Steuersatz die Soll-Flusskurve ermittelt, aus der dann im Steuersatz augenblickswertorientiert die Schalthandlungen bestimmt werden, wodurch die Oberschwingungen bestimmt werden.

Während die Soll-Spannung nur stationär gilt, gilt die Soll-Flussbandkurve stationär und dynamisch. Damit ist erreicht worden, dass die dynamische Vorsteuerung mit der erforderlichen Differentiation in den zeitdiskret arbeitenden Steuersatz 42 verlagert ist. Unter der Zeitdiskretisierung ist hier die Taktung durch das synchrone Pulsmuster zu verstehen.

Durch das geregelte Nachfahren der Soll-Flussbahnkurve ist die Nachführung der Integrationskonstante von Spannung zu Fluss automatisch gewährleistet, Ausgleichsvorgänge können nicht mehr auftreten.

In den Pulsmustertabellen des Steuersatzes 42 müssen nun statt Spannungszeigern und Schaltwinkeln, die in die Schaltzeit umgerechnet werden, Spannungszeiger und Klemmflusswerte (= Spannungsintegrale) vorgegeben werden. Die Fluss-Sollwerte $\underline{\Psi}_{Ksoll}$ ergeben eine zu erreichende Schaltschwelle, aus der mit der momentanen Zwischenkreisspannung $U_D$ und des bisher erreichten Fluss-Istwertes $\underline{\Psi}_K$ die Schaltzeit $T_{echalt}$ jeweils neu berechnet wird. Damit werden alle Fehler des Klemmenflusses $\underline{\Psi}_K$ bei Erreichen der jeweiligen Schaltschwelle korrigiert. Das Regelverfahren der Fehlerkorrektur hat damit Dead-Beat-Verhalten.

Da der Klemmenfluss $\underline{\Psi}_{Ksoll}$ nicht direkt als Stellgröße für die Drehmoment-Einprägung geeignet ist, weil die Spannungsabfälle am ohmschen Ständerwiderstand $R_s$ nur stationär berücksichtigt werden können, darf zur Korrektur auch nur ein quasistationärer Klemmenfluss-Istwert $\underline{\Psi}_K$ verwendet werden.

Die Korrekturmaßnahmen an den Pulsmustern zur Einhaltung der vorgegebenen Klemmenflussbahnkurve führen gemäß FIG 8 zu den folgenden unterschiedlichen Schaltschwellen.

Typen von Umschaltungen:

1. "Ecke" (Wechsel von einem Spannungszeiger zum anderen):

Flussbetragsschwelle: Die Projektionsachse steht senkrecht zu neuem Zeiger, die Schaltschwelle entspricht dem Schnittpunkt der neuen Flusstrajektorie mit der Projektionsachse.
Wirkung: Durch die Bestimmung des Klemmenfluss-Istwertes auf Basis der Sollständerströme gelingt es, den Ständerfluss-Istwert auch dynamisch zu zentrieren und gleichzeitig den Flussbetragsfehler aufgrund des Spannungsabfalls am Ständerwiderstand $R_s$ mit sehr guter Näherung vorgesteuert zu kompensieren. Der Fluss wird zentriert, der Flussbetragsfehler wird korrigiert.

2. "Null Ein" (Wechsel von einem Spannungszeiger zu einem Nullzeiger, der nächste Spannungszeiger ist der gleiche):

Die Projektionsachse steht senkrecht zum vorhergehenden (1. Halbsektor) bzw. übernächsten Spannungszeiger (2. Halbsektor).

3. "Null Ecke" (Wechsel von einem Spannungszeiger zu einem Nullzeiger, der nächste Spannungszeiger ist ein anderer):

Die Projektionsachse steht senkrecht zum nächsten Spannungszeiger.

4. "Null Aus" (Wechsel vom Nullzeiger zu einem Spannungszeiger) :

Flusswinkelschwelle: Der Nullzeiger wird aus- und der nächste Spannungszeiger eingeschaltet, wenn der laufende Sollwinkel des Klemmenflusses gleich dem Umschaltwinkel des Pulsmusters wird.

Wirkung: Da der Istfluss-Raumzeiger beim Einschalten des Nullzeigers an der vom Pulsmuster vorgegebenen Stelle der Flusstrajektorie angehalten hat, ist beim Weiterlaufen beim Erreichen des Ausschalt-Sollwinkels durch den Sollfluss-Raumzeiger der Sollwinkel zwischen Ständerfluss und Rotorfluss-Raumzeiger und damit das Drehmoment sehr genau eingestellt. Ein Winkelfehler wird durch das Einschalten des Nullzeigers durch den Istwert und das Ausschalten aufgrund des Sollwertes bestmöglich kompensiert.

Die Pulsmustertabellen bestehen somit aus einer Abfolge dieser Umschaltungen, wobei neben dem Wert der Flussschwelle der Typ der Umschaltung, der Schaltzustand (Spannungszeiger) und die Projektionsachse abgelegt sind.

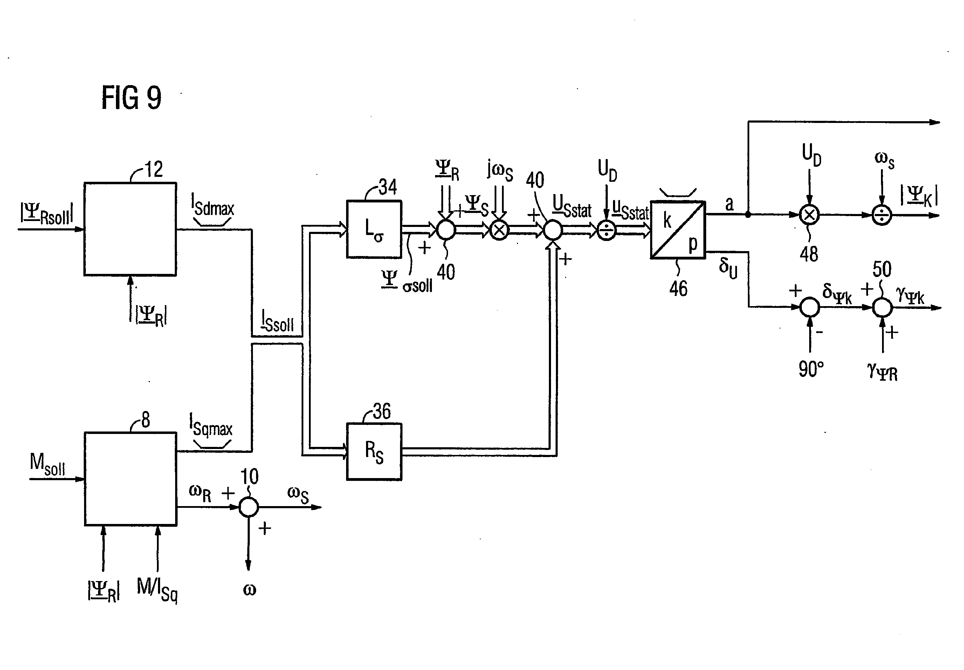

In der FIG 9 ist die Realisierung eines vorteilhaften Verfahrens nach der Erfindung schematisch veranschaulicht. Gemäß dieser Darstellung wird aus einem vorbestimmten Rotorflussbetrag $|\underline{\Psi}_{Rsoll}|$ mittels eines Flussreglers 12 eine flussbildende Stromkomponente $I_{Sdsoll}$ ermittelt. Aus einem Drehmoment-Sollwert $M_{soll}$ wird mittels eines Drehmoment-reglers 8 und mit dem aus dem Motormodell 14 ermittelten Rotorflussbetrags-Istwert $|\underline{\Psi}_R|$ eine momentenbildende Stromkomponente $I_{sqsoll}$ berechnet. Daneben wird mit einer berechneten stationären Rotorschlupffrequenz $\omega_R$ eine für die Pulsmusterauswahl und für Vorausberechnungen benötigte vorgesteuerte, stationär gültige Ständerkreisfrequenz $\omega_s$ (= Winkelgeschwindigkeit des Ständerflusses) bestimmt. Diese beiden Stromkomponenten $I_{Sdsoll}$ und $I_{Sqsoll}$ werden jeweils betragsmäßig begrenzt, bevor diese wie in der Struktur nach FIG 6 mit einer Einrichtung 34 und 36 multipliziert werden. Am Ausgang der Einrichtung 34 steht dann ein Streufluss-Sollwert $\underline{\Psi}_\sigma$ an, der einen Rotorfluss-Istwert $\underline{\Psi}_R$ aufaddiert wird, so dass am Ausgang des Addierers 40 ein Ständerfluss-Sollwert $\underline{\Psi}_{Ssoll}$ ansteht. Dieser Ständerfluss-Sollwert $\underline{\Psi}_{Ssoll}$ wird mit einer imaginären Ständerkreisfrequenz $\omega_s$ multipliziert, dessen Produkt mittels eines weiteren Addierers 40 auf einem am Ausgang der Einrichtung 36 anstehenden Spannungswert aufaddiert wird. Dadurch erhält man einen stationären Sollwert der Ständerspannung $U_{sstat}$. Dieser Sollwert des stationären Ständerspannungswerts $U_{sstat}$ wird auf die Zwischenkreisspannung $U_D$ normiert. Die orthogonalen Komponenten dieser normierten stationären Ständerspannung $\underline{U}_{Sstat}$ werden in polare Komponenten Aussteuergrad a und Spannungswinkel $\delta_u$ umgewandelt. Dazu wird ein Koordinatenwandler 46 verwendet. Die polare Komponente Aussteuergrad a wird einerseits direkt zur Adressierung einer Winkeltabelle optimierter Pulsmuster und geglättet zur Adressierung einer Pulsmusterauswahlebene verwendet und andererseits zur Ermittlung eines Grundschwingungs-Klemmenflussbetrag $|\underline{\Psi}_K|$ verwendet. Dazu wird die polare Komponente Aussteuergrad a einem Multiplizierer 48 zugeführt. Am zweiten Eingang des Multiplizierers 48 steht die Zwischenkreisspannung $U_D$ an. Dadurch wird eine Entnormierung herbeigeführt. Der Wert am Ausgang dieses Multiplizierers 48 wird anschließend durch die Ständerkreisfrequenz $\omega_s$ geteilt, so dass der Grundschwingungs-Klemmenflussbetrag $|\underline{\Psi}_K|$ ansteht.

Aus der polaren Komponente Spannungswinkel $\delta_u$ (Winkel zwischen Spannung $\underline{U}_{Sstat}$ und Rotorfluss $\underline{\Psi}_R$ gemäß FIG 2) wird durch Subtraktion von 90° ein Winkel $\delta_{\Psi K}$ (bzw. $\chi_{soll}$) zwischen Klemmenfluss $\underline{\Psi}_K$ und Rotorfluss $\underline{\Psi}_R$ ermittelt. Auf diesen Winkel $\delta_{\Psi K}$ wird mittels eines weiteren Addierers 50 der laufende Rotorflusswinkel $\gamma_{\Psi K}$ des Motormodells 14 aufaddiert und man erhält den laufenden Klemmenfluss-Sollwinkel $\gamma_{\Psi Ksoll}$ für einen Spannungszeitflächen-Steuersatz.

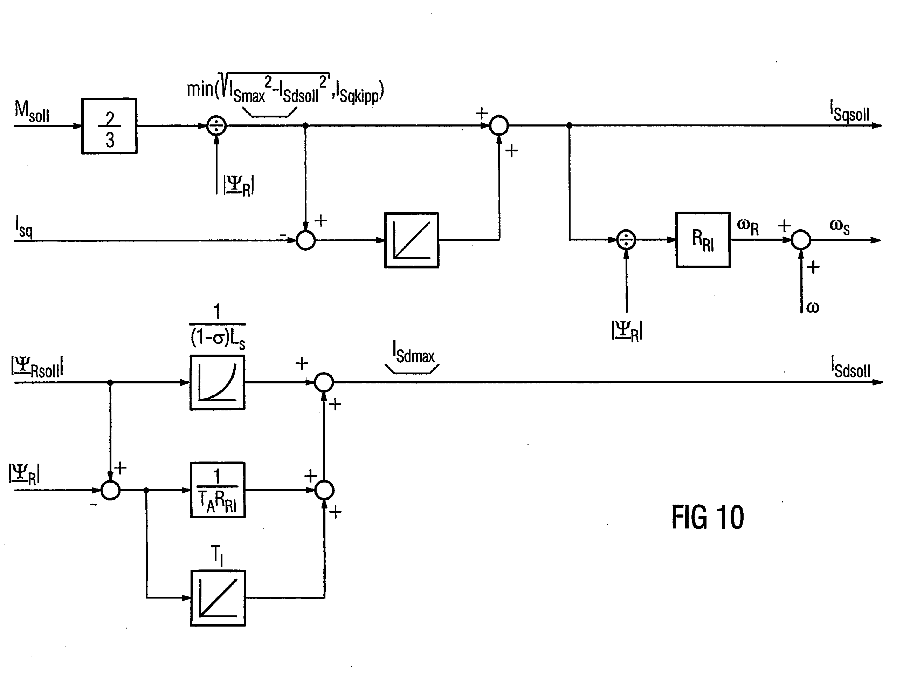

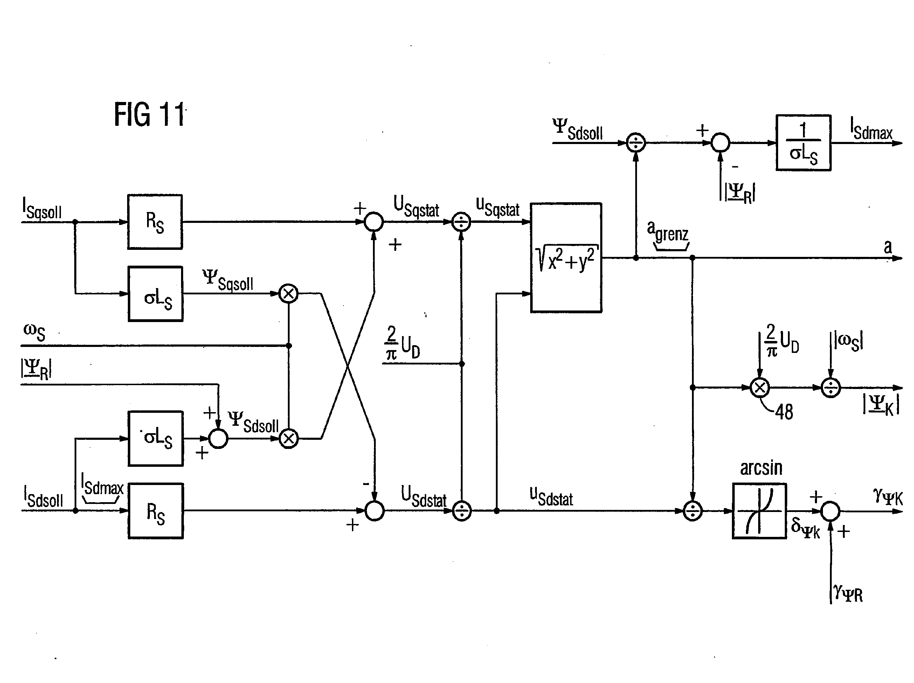

In der FIG 10 sind beispielhaft Drehmoment- und Flussregung 8 und 12 explizit dargestellt, wogegen in der FIG 11 die anschließende stationäre und dynamische Vorsteuerung veranschaulicht ist.

Durch den Umweg über die Berechnung der stationären Ständerspannung $\underline{U}_{Sstat}$ erhält man einerseits den Aussteuerungsgrad a und andererseits kann man diesen Aussteuerungsgrad a in Feldschwächbereich begrenzen. Der Aussteuerungsgrad a wird für die Auswahl eines Pulsmusters benötigt. Dieser Aussteuergrad a wird direkt zur Adressierung der Winkeltabelle des Pulsmusters und geglättet zur Adressierung der Pulsmusterauswahlebene U/f-Ebene verwendet. Bei der Begrenzung des Aussteuergrades a im Feldschwächbereich (FIG 11) muss die Berechnung des Spannungswinkels $\delta_u$ so erfolgen, dass die stationär momentenbildende Spannungskomponente $u_{Sdstat}$ (FIG 11) weiter ihren Sollwert entspricht. Dieser Spannungswinkel $\delta_u$ wird mit folgender Gleichung:

$$\delta_u = \arcsin \frac{u_{Sdstat}}{a_{begr}} + 90° = \arcsin \frac{U_{Sdstat}}{a_{begr} \cdot \frac{2}{\pi} \cdot U_D} + 90°$$

berechnet.

Gemäß der FIG 11 muss der Sollwert der feldbildenden Stromkomponente $I_{Sdsoll}$ für die Berechnung des ohmschen Spannungsabfalls am Ständerwiderstand $R_s$, der in den Kanal der momentenbildenden Spannungskomponente $U_{Sdstat}$ hineinwirkt, auf den Wert begrenzt werden, der dem im momentanen Betriebszustand realisierbaren Fluss entspricht. Dies ist erforderlich, damit bei Aussteuergradbegrenzung kein stationärer Fehler des vorgesteuerten Drehmoments auftritt.

Bei der Ermittlung der Pulsmuster ist der ohmsche Ständerwiderstand $R_s$ ohne Belang, da er für Oberschwingungen gegenüber der Streureaktanz vernachlässigbar ist. Dadurch wird eine lastunabhängige Vorausberechnung der Pulsmuster möglich.

Durch diese ist dann die Klemmenflussbahnkurve bestimmt. Für die Grundschwingung, über die das Drehmoment $M_{soll}$ eingestellt wird, kann der ohmsche Ständerwiderstand $R_s$ allerdings nicht vernachlässigt werden. Der Spannungsabfall an ihm verursacht die Differenz zwischen Klemmenfluss $\underline{\Psi}_K$ und Ständerfluss $\underline{\Psi}_s$.

Die Annahme, dass der geforderte stationäre Zustand bei synchronen Pulsmustern vor allem bei vorhandenen Nullzeigern $U_6$, $U_7$ praktisch mit jedem neuen Schaltzustand erreicht werden kann, erlaubt es, beim Vergleich eines Klemmenfluss-Istwertes $\underline{\Psi}_K$ mit ausgewählten Flussbetragsschwellen $\underline{\Psi}_{KSchw}$ die stationären Spannungsabfälle am ohmschen Ständerwiderstand $R_s$ zugrunde zu legen, die den - als stationär betrachteten - Strom-Sollwerten entspricht.

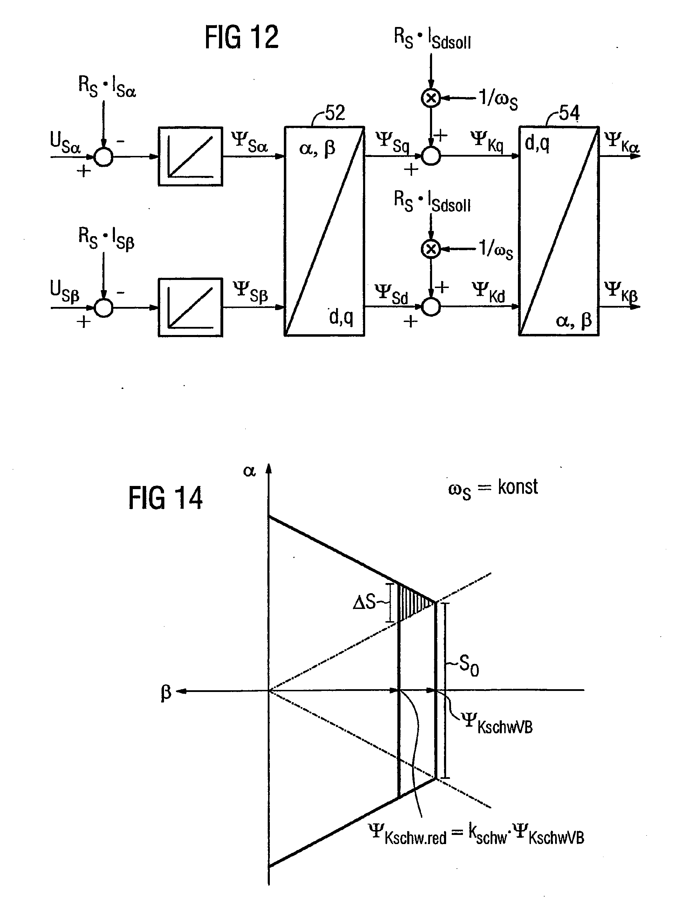

Dazu ist es gemäß FIG 12 erforderlich zur Berechnung des aktuellen Klemmenflusses, vor der Integration der Ständerspannung $\underline{U}_S$ den durch den momentanen Ständerstrom $\underline{I}_S$ verursachten Spannungsabfall am ohmschen Ständerwiderstand $R_s$ abzuziehen, und damit den Ständerflussmomentanwert zu berechnen. Die Integration erfolgt zweckmäßig in ständerfesten Koordinaten $\alpha$, $\beta$, die Ständerflusskomponenten $\Psi_{S\alpha}$ und $\Psi_{S\beta}$ werden dann in das rotorflusssynchrone Koordinatensystem d, q mittels eines Koordinatendrehers 52 gedreht, damit mit den in Rotorkoordinaten vorhandenen Strom-Sollwerten $I_{sdsoll}$ und $I_{sqsoll}$ die stationären Klemmenflusskomponenten $\Psi_{Kq}$ und $\Psi_{Kd}$ bestimmt werden können. Für die weitere Verwendung dieser Klemmenflusskomponenten $\Psi_{Kq}$ und $\Psi_{Kd}$ werden diese mittels eines weiteren Koordinatendrehers 54 wieder in ständerfeste Koordinaten $\Psi_{K\alpha}$ und $\Psi_{K\beta}$ zurückgedreht. Am Ausgang dieses Koordinatendrehers 54 stehen dann die ständerfesten Klemmflusskomponenten $\Psi_{K\alpha}$ und $\Psi_{K\beta}$ an. Dadurch wird in guter Näherung statt dem Klemmenfluss $\underline{\Psi}_K$ der Ständerfluss $\underline{\Psi}_S$ dynamisch eingeprägt, und damit direkt Ständerstrom $I_s$ und Drehmoment M. Ausgleichsvorgänge durch den ohmschen Ständerwiderstand $R_s$ werden vermieden.

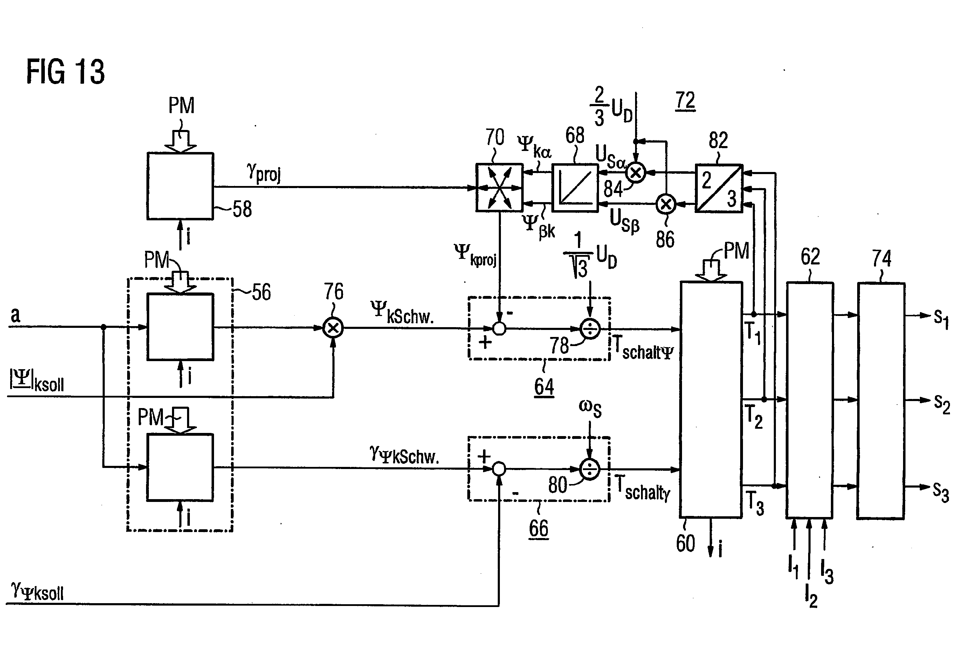

In der FIG 13 ist die Struktur eines Spannungszeitflächen-Steuersatzes im Grunddrehzahlbereich näher dargestellt. In dieser Struktur sind mit 56, 58 und 60 jeweils ein Speicher, mit 62 eine Einrichtung zur Stromrichterlinearisierung, mit 64 eine Einrichtung zur Berechnung von Schaltzeiten für Flussbetragsschwellen, mit 66 eine Einrichtung zur Berechnung von Schaltzeiten für Flusswinkelschwellen, mit 68 eine Einrichtung zur Ermittlung eines Klemmfluss-Istwertes $\underline{\Psi}_K$, mit 70 eine Sektorprojezierungseinrichtung, mit 72 eine Einrichtung zur Generierung von Spannungskomponenten $U_{s\alpha}$ und $U_{S\beta}$ eines Ständerspannungs-Istwertes $\underline{U}_s$ aus Schaltzuständen T1, T2 und T3 und mit 74 ist ein Schaltzeitzähler bezeichnet. In den Speichern 56, 58 und 60 sind die off-line berechneten Pulsmuster PM abgelegt, wobei in dem Speicher 56 eine Tabelle mit Flussbetragsschwellen und eine Tabelle mit Flusswinkelschwellen hinterlegt sind. Im Speicher 58 ist eine Tabelle mit Projektionsachsen abgelegt und in dem Speicher 60 ist eine Tabelle mit Schaltzuständen (Spannungszeiger) hinterlegt.

In Abhängigkeit der polaren Komponente Aussteuerungsgrad a der Stellgröße Klemmenfluss-Sollwert $\underline{\Psi}_{Ksoll}$ wird eine auf Nennfluss normierte Flussbetragsschwelle und eine entsprechende Flusswinkelschwelle $\gamma_{\Psi KSchw}$ aus dem Speicher 56 ausgelesen. Diese ausgelesene normierte Flussbetragsschwelle wird mittels eines Multiplizierers 76 mit der polaren Komponente Grundschwingungs-Klemmenflussbetrag $|\underline{\Psi}_K|$ soll der Stellgröße Klemmenfluss-Sollwert $\underline{\Psi}_{Ksoll}$ multipliziert. Als Ergebnis erhält man eine zum Aussteuergrad a korrespondierende Flussbetragsschwelle $\Psi_{KSchw}$. Diese Flussbetragsschwelle $\Psi_{KSchw}$ wird in der Einrichtung 64' zunächst mit einem projizierten Klemmenfluss-Istwert $\Psi_{Kproj}$ verglichen, der am Ausgang der Sektorprojezierungseinrichtung 70 ansteht. Die ermittelte Differenz wird einem Dividierer 78 zugeführt, an dessen zweiten Eingang ein Wert $1/\sqrt{3}\,U_D$ ansteht, der einer auf die Projektionsachse bezogene Bahngeschwindigkeit des Klemmenflusses $\underline{\Psi}_K$ entspricht. Am Ausgang dieses Dividierers 78 steht eine entsprechende Schaltzeit $T_{schalt\Psi}$ an, die einem Eingang des Speichers 60 mit der Tabelle Schaltzustände zugeführt wird. Mittels dieser Schaltzeit $T_{schalt\Psi}$ wird ein Nullzeiger $U_6$, $U_7$, eine "Ecke" bzw. eine "Null Ecke" eingeschaltet.

Die aus dem Speicher 56 ausgelesene Flusswinkelschwelle $\gamma_{\Psi KSchw}$ wird in der Einrichtung 66 mit dem laufenden Klemmenfluss-Sollwinkel $\gamma_{\Psi Ksoll}$ verglichen, dessen Differenz durch die Bahngeschwindigkeit des Flusswirkels dividiert wird. Die Bahngeschwindigkeit ist proportional zur Ständerkreisfrequenz $\omega_s$. Am Ausgang des Dividierers 78 steht eine Schaltzeit $T_{schalt\gamma}$ für das Ausschalten eines Nullzeigers an, die ebenfalls einem zweiten Eingang des Speichers 60 zugeführt wird.

In Abhängigkeit dieser Schaltzeiten $T_{schalt\Psi}$ und $T_{schalt\gamma}$ wird der nächste (i-te) Schaltzustand aus dem Speicher 62 ausgelesen und die Schaltzeit dem zugehörigen Wechselrichterstrang zugewiesen. Die sich ergebenden Schaltzeiten T1, T2 und T3 werden der Einrichtung 62 zur Stromrichterlinearisierung und einem Koordinatenwandler 82 der Einrichtung 72 zur Generierung von Spannungskomponenten $U_{s\alpha}$ und $U_{s\beta}$ eines Ständerspannungs-Sollwertes $\underline{U}_s$ zugeführt. Die beiden Ausgänge dieses Koordinatenwandlers 82 sind jeweils mit einem Multiplizierer 84 und 86 verbunden, an deren zweiten Eingängen jeweils der Faktor $2/3U_D$ ansteht. An den Ausgängen dieser beiden Multiplizierer 84 und 86 steht jeweils eine Spannungskomponente $U_{S\alpha}$ bzw. $U_{s\beta}$ eines Ständerspannungs-Sollwertes $\underline{U}_s$ an. Aus diesen Spannungskomponenten $U_{s\alpha}$ und $U_{s\beta}$ werden Klemmenfluss-Istwertkomponente $\Psi_{K\alpha}$ und $\Psi_{K\beta}$ mit der Einrichtung 68 berechnet, wobei in der FIG 12 ein Ausführungsbeispiel für diese Einrichtung 68 veranschaulicht ist. Mittels der Sektorporjezierungseinrichtung 70 erhält man aus diesen beiden berechneten Klemmenfluss-Istwertkomponenten $\Psi_{K\alpha}$ und $\Psi_{K\beta}$ einen auf den Sektor Null projizierten Klemmenfluss-Istwert $\Psi_{Kproj}$.

Mittels der Einrichtung 62 werden stromabhängige Spannungsfehler des Pulsstromrichters 24 auch bei synchronen Pulsmuster kompensiert. Dazu sind dieser Einrichtung 62 die Stromrichter-Ausgangsströme $I_1$, $I_2$ und $I_3$ zugeführt. Der nachgeschaltete Schaltzeitzähler 74 gewährleistet die exakte Ausgabe der voraus berechneten Zeiten und damit ein einwandfreies stationäres Verhalten des Klemmenfluss-Steuersatzes wie ein Spannungssteuersatz. Da nach der Stromrichterlinearisierung die Reihenfolge der Schaltzustände unter Umständen nicht mehr der vom Pulsmuster vorgegebenen entspricht, sollte zur Vermeidung eines softwaremäßigen Neusortierens der Umschaltung eine Zählerhardware eingesetzt werden, bei der die Reihenfolge der Ausgabe nur von den geladenen Schaltzeiten und nicht von der Reihenfolge des Ladens abhängt.

Bei fehlenden oder zu kurzen Nullzeigern $U_6$, $U_7$ kann ein Winkelfehler oder ein dynamischer Spannungswinkelanteil nicht mehr über deren Veränderung ausgeregelt werden. Durch den Winkel wird aber hauptsächlich das Drehmoment beeinflusst, das in jedem Betriebspunkt hochdynamisch und unabhängig vom Fluss einzustellen ist. Deshalb muss wie bei Vollaussteuerung die Drehmomentvorsteuerung und -regelung hier vorrangig vor der Flussvorsteuerung und -regelung behandelt werden, zumal dynamische Änderung der feldbildenden Stromkomponente wegen der großen Rotationszeitkonstante nur sehr abgeschwächt auf den Rotorfluss $\Psi_R$ wirken. Entscheidend ist allerdings, dass sich die feldbildende Stromkomponente $I_{Sdoll}$, die nicht mehr unabhängig zu beeinflussen ist, nicht nennenswert vergrößert, da dann die für den Pulswechselrichter wichtige Strombegrenzung nicht mehr wirkt.

Der Winkel $\delta_{\Psi K}$ des Klemmenfluss $\underline{\Psi}_{Ksoll}$ muss dazu über die Flussbetragsschwellen $\Psi_{KSchw}$ beeinflusst werden. Eine dynamische Änderung der Flussbetragsschwellen $\Psi_{KSchw}$ bewirkt eine Verlängerung oder Verkürzung der Flussbahnkurve, die bei konstanter Zwischenkreisspannung $U_D$ mit konstanter Bahngeschwindigkeit durchlaufen wird, und damit einen langsameren oder schnelleren Umlauf, wodurch sich der Winkel $\delta_{\Psi K}$ des Klemmenflusses $\underline{\Psi}_{Ksoll}$ gegenüber dem Rotorfluss $\underline{\Psi}_R$ ändert.

Diese Bahnkurvensteuerung funktioniert im Prinzip wie die dynamische Feldschwächung bei asynchroner Modulation, bei synchroner Taktung ist sie jedoch im Gegensatz dazu exakt vorsteuerbar, weil der Bereich der Bahnkurvenänderung von einem Sektor durch die Festlegung des Pulsmusters für einen Sektor bekannt ist.

Diese Änderung der Regelstruktur beginnt dynamisch wegen der Abhängigkeit von den Nullzeiger $U_6$ bzw. $U_7$ bereits vor Vollaussteuerung bei Aussteuergraden von 0,8 bis 0,9, bei Erreichen der Aussteuerungsbegrenzung wirkt sie dann auch stationär, d.h. die feldbildende Stromkomponente $I_{Sdsoll}$ und der Rotorfluss $\underline{\Psi}_R$ sind auch stationär nicht mehr zu beeinflussen. Hier sorgt die stationäre Vorsteuerung für den korrekten Sollwinkel.

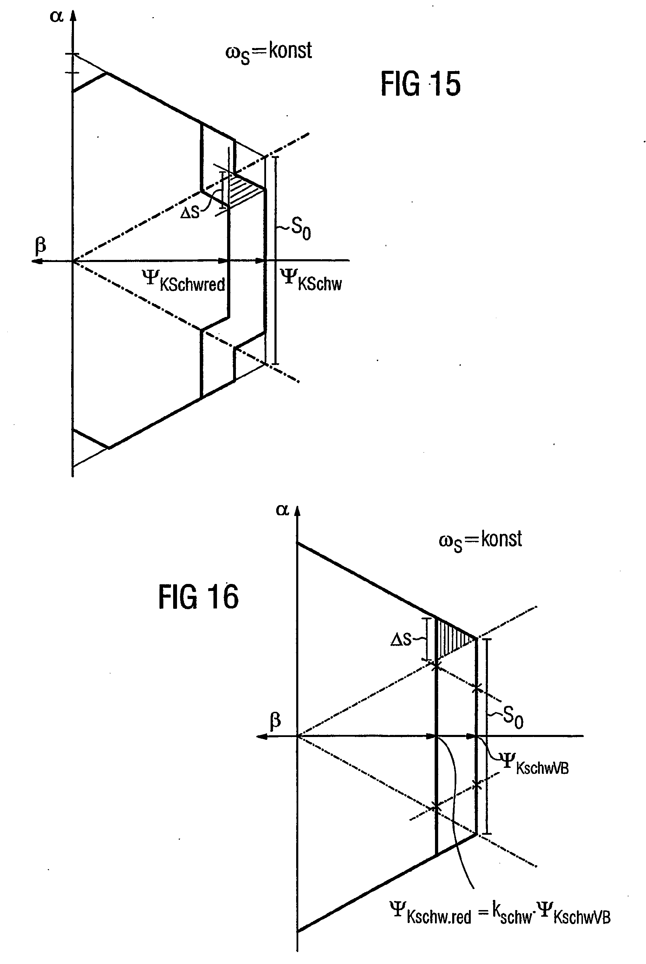

Zur Veränderung der Länge der Flussbahnkurve werden in dem momentanen Sektor die Umschaltschwellen der Flussbahnkurve verändert, so dass diese zu kleineren oder größeren Werten parallel verschoben wird. In der FIG 14 ist eine Bahnkurvenabkürzung für Vollblock und in der FIG 16 ist eine Bahnkurvenabkürzung bei einem Flankenpulsmuster, beispielsweise 3-fach-Flanke, gezeigt. Aus der Geometrie kann man entnehmen, dass die Bahnlängenveränderung und entsprechend die Winkeländerung linear von einer Schwellenänderung abhängt. Der erforderliche Anpassfaktor ergibt sich zu:

$$K_{Schw} = 1 - \frac{\Delta\delta_{\Psi K}}{60°}$$

In der FIG 14 ergibt sich mit diesem Anpassfaktor $K_{Schw}$ aus einer vorausberechneten Flussbetragsschwelle $\Psi_{KSchVB}$ eine reduzierte Flussbetragsschwelle $\Psi_{KSchred}$, wodurch sich die Länge $S_0$ der Bahnkurve um $\Delta S$ verkürzt.

Bei Pulsmustern mit Umschaltungen an den Flanken (Eckeneinklappungen) ergibt sich die Eigenschaft, dass die Länge $S_0$ der Bahnkurve ausschließlich von der maximalen Flussschwelle abhängt, und unabhängig von allen kleineren ist. Ein einfaches proportionales Verändern aller Flussschwellen erfüllt also die oben angegebenen Gleichungen. Diese Funktion ist damit vom Pulsmuster unabhängig.

Grundsätzlich ist durch die dynamische Bahnlängenänderung $\Delta S$ ein Vor- und Zurückdrehen des Klemmenflusswinkels $\delta_{\Psi K}$ gegenüber dem Rotorfluss $\underline{\Psi}_R$ möglich, entsprechend einer Erhöhung (in Richtung Fahren) oder Erniedrigung (in Richtung Bremsen) des Drehmoments $M_{soll}$. Es muss allerdings beachtet werden, dass sich wegen der Flussverminderung beim Vordrehen ein kleinerer feldbildender Strom als im stationären Betrieb einstellt, beim Zurückdrehen wegen der Flusserhöhung aber ein größerer. Deshalb darf ein Zurückdrehen des Winkels $\delta_{\Psi K}$ nur in einem sehr geringen Maß vorgenommen werden.

Dies stellt allerdings kein schwerwiegendes Problem dar, da größere Winkeländerungen nur bei Drehmomenterhöhung an der Aussteuerungsgrenze benötigt werden. Bei Drehmomenterniedrigung wird von der Vorsteuerung ein Aussteuergrad kleiner Eins gefordert, der stationär zur Auswahl eines Pulsmusters mit Nullzeiger $U_6$, $U_7$ führt. Dynamisch können hier asynchron Nullspannungsraumzeiger geschaltet werden. Die Anzahl der zugelassenen Nullspannungen pro Sektor kann dabei parametriert werden.

Wenn im Übergangsbereich zur Vollaussteuerung Nullzeiger $U_6$, $U_7$ auftreten, die aber schon zu kurz für erforderliche Winkeländerungen sind, muss bei einer eingeleiteten Bahnkurvenverkürzung die hier durch erzielbare Winkelkompensation bei den Nullspannungen berücksichtigt werden, da ansonsten eine überkompensation erfolgen würde.

Dazu werden die Flussbetragsschwellen $\Psi_{KSchw}$, an denen die Nullzeiger $U_6$, $U_7$ eingeschaltet werden, nicht mit dem Anpassfaktor $K_{Schw}$ multipliziert, sondern unverändert gelassen. Da in der ersten und zweiten Sektorhälfte die Einschaltschwellen der Nullzeiger jeweils andere Projektionsachsen haben, ergibt sich daraus für die Ausschaltschwellen der Nullzeiger mit FIG 16

- Nullzeiger in erster Sektorhälfte:

  Einschalten um $\Delta S \approx \Delta_{\gamma\Psi K}$ vorgezogen, keine Korrektur des Ausschaltwinkels

- Nullzeiger in zweiter Sektorhälfte:

  Einschalten nicht vorgezogen, verzögern des Ausschaltwinkels um $\Delta_{\gamma\Psi K}$.

Dadurch wird die Regelfunktion durch die Nullzeiger unterbunden und nur die Winkeländerungen durch die Bahnkurvenabkürzungen wirksam.

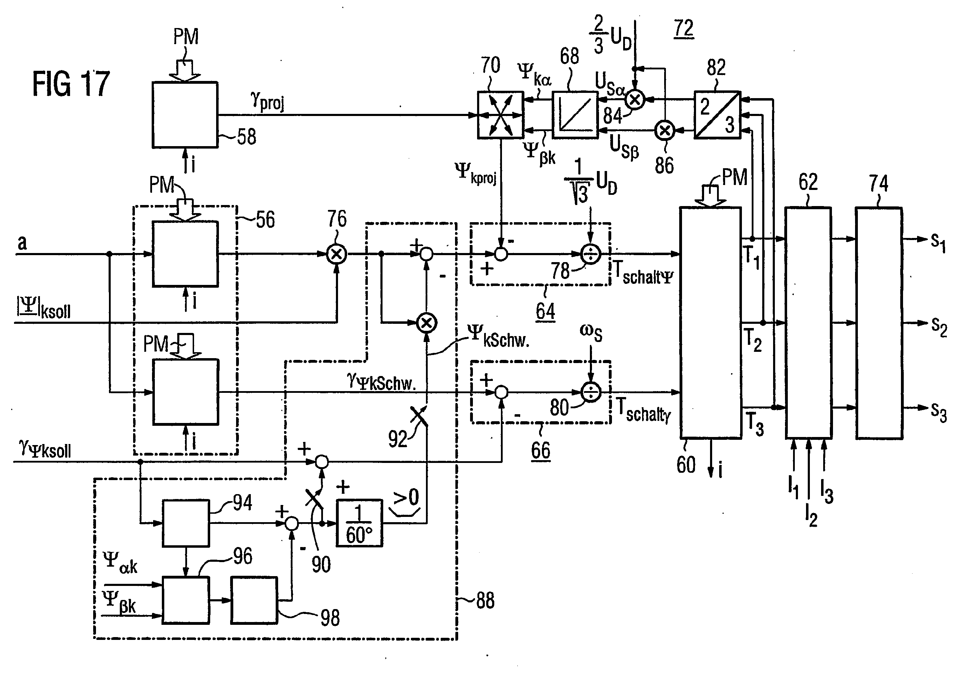

In der FIG 17 ist eine Struktur eines Spannungsflächen-Steuersatzes dargestellt, die sich von der Struktur gemäß FIG 13 nur durch eine Zusatzeinrichtung 88 unterscheidet. Diese Zusatzeinrichtung 88 greift auf den laufenden Klemmenfluss-Sollwinkel $\gamma_{\Psi Ksoll}$ und der Flussbetragsschwelle $\Psi_{Kschw}$ gesteuert ein. Der Eingriff auf den laufenden Klemmenfluss-Sollwinkel $\gamma_{\Psi Ksoll}$ erfolgt in der zweiten Sektorhälfte, wogegen der Eingriff auf die Flussbetragsschwelle $\Psi_{KSchw}$ bei einer "Ecke" erfolgt. Für diese gesteuerte Einflussnahme weist diese Zusatzeinrichtung 88 zwei Schalter 90 und 92 auf. Am Eingang des Schalters 90 steht eine Winkeldifferenz des Winkels des Klemmenfluss-Istwertes $\Psi_{K\alpha}$, $\Psi_{K\beta}$ zur Sollflussbahnkurve an. Dieser Differenzwert kann am Anfang und in der Mitte eines jeden Sektors bestimmt werden. Die Mitte eines jeden Sektors wird mittels der Einrichtung 94 erkannt. Mittels der Einrichtung 96 und 98 wird der Winkel eines berechneten Klemmenfluss-Istwertes $\Psi_{K\alpha}$, $\Psi_{K\beta}$ im voraus berechnet.

Aus dieser Winkeldifferenz wird anschließend der Anpassfaktor $K_{schw}$ ermittelt, mit dem außer beim Einschalten von Nullzeigern $U_6$, $U_7$ die Flussbetragsschwelle $\Psi_{KSchw}$ modifiziert wird. In der zweiten Sektorhälfte muss die Winkeldifferenz noch zur Flusswinkelschwelle $\gamma_{\Psi Ksoll}$ zum Ausschalten von Nullzeigern addiert werden.

Durch dieses erfindungsgemäße Verfahren wird die hohe Regeldynamik direkt schaltender Verfahren mit dem optimalen stationären Verhalten off-line optimierter Pulsmuster kombiniert.

**Patentansprüche**

1. Verfahren zur gesteuerten Einprägung eines Ständerstrom-Sollwertes ($I_{Ssoll}$) und eines Drehmoment-Sollwertes ($M_{soll}$) für eine stromrichtergespeiste Drehfeldmaschine (4), wobei in Abhängigkeit eines vorbestimmten Rotorfluss-Sollwertes ($\Psi_{Rsoll}$) und eines ermittelten Rotorfluss-Istwertes ($\Psi_R$)eine feldbildende Stromkomponente ($I_{Sdsoll}$) des Ständerstrom-Sollwertes ($I_{ssoll}$) und in Abhängigkeit eines vorbestimmten Drehmoment-Sollwertes ($M_{soll}$), des ermittelten Rotorfluss-Istwertes ($\Psi_R$) und einer ermittelten drehmomentbildenden Stromkomponente ($I_{sq}$) eines gemessenen Ständerstromes ($I_s$) eine drehmomentbildende Stromkomponente ($I_{Sqsoll}$) des Ständerstrom-Sollwertes ($I_{Ssoll}$) berechnet werden, wobei in Abhängigkeit einer ermittelten Rotorschlupffrequenz ($\omega_R$) und einer Kreisfrequenz ($\omega$) ein Ständerkreisfrequenz-Istwert ($\omega_s$) bestimmt wird, wobei aus diesen berechneten Werten ($I_{Sdsoll}$, $I_{Sqsoll}$, $\omega_s$, $\Psi_R$) in Abhängigkeit der Parameter frequenzabhängige Streuinduktivität ($L_\sigma$) und Ständerwiderstand ($R_S$) als Stellgröße das Integral der Ständerspannung ($T_{Ksoll}$) berechnet wird, aus dem eine aus abgespeicherten off-line optimierten Flussbahnkurven ausgewählte Flussbahnkurve abgeleitet wird.

2. Verfahren nach Anspruch 1,
**dadurch gekennzeichnet, dass** in Abhängigkeit der berechneten Stromkomponenten ($I_{Sdsoll}$,$I_{Sqsoll}$), der Parameter frequenzabhängige Streuinduktivität ($L_\sigma$) und Ständerwiderstand ($R_S$), der Ständerkreisfrequenz ($\omega_S$) und des Rotorfluss-Istwertes ($\Psi_R$) eine stationäre normierte Ständerspannung ($U_{Sstat}$) berechnet wird, die mittels einer gemessenen Zwischenkreisspannung ($U_D$) normiert wird.

3. Verfahren nach einem der vorgenannten Ansprüche,
**dadurch gekennzeichnet, dass** zur Ermittlung eines Klemmenfluss-Istwertes ($\underline{\Psi}_K$) vor der Integration der Ständerspannung ($\underline{U}_s$) von dieser ein durch den momentanen Ständerstrom ($\underline{I}_s$) verursachter Spannungsabfall am Ständerwiderstand ($R_s$) subtrahiert wird und nach der Integration nach Transformation in ein rotorflusssynchrones Koordinatensystem ein durch den einzuprägenden Ständerstrom-Sollwert ($I_{Ssoll}$) verursachter Spannungsabfall am Ständerwiderstand ($R_s$) dividiert durch die Ständerkreisfrequenz $\omega_s$ addiert wird.

4. Verfahren nach Anspruch 2,
**dadurch gekennzeichnet, dass** aus der normierten stationären Ständerspannung ($\underline{U}_{Sstat}$) als polare Komponenten ein Aussteuerungsgrad (a) und ein Spannungswinkel ($\delta_U$) berechnet werden.

5. Verfahren nach Anspruch 2 und 4,
**dadurch gekennzeichnet, dass** in Abhängigkeit der gemessenen Zwischenkreisspannung ($U_D$) der berechneten Ständerkreisfrequenz ($\omega_s$) aus dem Aussteuerungsgrad (a) gemäß folgender Gleichung:

$$|\underline{\Psi}_K| = \frac{a \cdot U_D \cdot \frac{2}{\pi}}{\omega_s}$$

ein Grundschwingungs-Klemmenflussbetrag berechnet wird.

6. Verfahren nach Anspruch 2 und 4,
**dadurch gekennzeichnet, dass** in Abhängigkeit eines ermittelten laufenden Rotorflusswinkels ($\gamma_{\Psi R}$) und eines ermittelten Winkels ($\delta_{\Psi K}$) zwischen Klemmenfluss ($\Psi_K$) und Rotorfluss ($\Psi_R$) gemäß folgender Gleichung:

$$\gamma_{\Psi Ksoll} = \gamma_{\Psi R} + \delta_{\Psi K}$$

ein laufender Klemmenfluss-Sollwinkel ($\gamma_{\Psi Ksoll}$) berechnet wird.

7. Verfahren nach Anspruch 4,
**dadurch gekennzeichnet, dass** die polare Komponente Spannungswinkel ($\delta_U$) der normierten stationären Ständerspannungskomponente ($\underline{U}_{Sdstat}$) gemäß folgender Gleichung:

$$\delta_U = \arcsin \frac{U_{Sdstat}}{a \cdot U_D \cdot 2/\pi} + 90°$$

berechnet wird.

8. Verfahren nach Anspruch 7,
**dadurch gekennzeichnet, dass** der Winkel ($\delta_{\Psi K}$) zwischen Klemmenfluss ($\Psi_K$) und Rotorfluss ($\Psi_R$) gemäß folgender Gleichung:

$$\delta_{\Psi K} = \delta_u - 90° = \arcsin \frac{U_{sdstat}}{a \cdot U_D \cdot 2/\pi}$$

berechnet wird.

**Claims**

1. Method for controlled application of a stator current set point value ($\underline{I}_{Snom}$) and of a torque set point value ($M_{nom}$) for a converter-fed rotating-field machine (4), with a field-forming current component ($I_{Sdnom}$) of the stator current set point value ($\underline{I}_{Snom}$) being calculated as a function of a predetermined rotor flux set point value ($\Psi_{Rnom}$) and of a determined rotor flux actual value ($\Psi_R$), and with a torque-forming current component ($I_{Sqnom}$) of the stator current set point value ($\underline{I}_{Snom}$) being calculated as a function of a predetermined torque set point value ($M_{nom}$), of the determined rotor flux actual value ($\Psi_R$) and of a determined torque-forming current component ($I_{Sq}$) of a measured stator current ($\underline{I}_S$), with a stator angular frequency actual value ($\omega_s$) being determined as a function of a determined rotor slip frequency ($\omega_R$) and of an angular frequency ($\omega$) and with the integral of the stator voltage ($\Psi_{Knom}$) being calculated as a manipulated variable from these calculated values ($I_{Sdnom}$, $I_{Sqnom}$, $\omega_S$, $\Psi_R$) as a function of the parameters comprising the frequency-dependent stray inductance ($L_o$) and the stator resistance ($R_s$), from which integral a flux path curve is derived, which is selected from stored off-line optimized flux path curves.

2. Method according to Claim 1,
**characterized in that** a steady-state normalized stator voltage ($U_{Sstead}$), which is normalized by means of a measured intermediate circuit voltage ($U_D$), is calculated as a function of the calculated current components ($I_{sdnom}$, $I_{Sqnom}$), of the parameters comprising the frequency-dependent stray inductance ($L_o$) and the stator resistance ($R_S$), the stator angular frequency ($\omega_S$) and the rotor flux actual value ($\Psi_R$) ·

3. Method according to one of the abovementioned claims, **characterized in that**, in order to determine a terminal flux actual value ($\Psi_K$) before the integration of the stator voltage ($\underline{U}_s$), a voltage drop caused by the instantaneous stator current ($I_S$) across the stator resistance ($R_S$) is subtracted from this and, after the integration, a voltage drop caused by the stator current set point value ($I_{Snom}$) to be applied across the stator resistance ($R_S$), divided by the stator angular frequency $\omega_s$, is added after transformation to a coordinate system which is synchronized to the rotor flux.

4. Method according to Claim 2,
**characterized in that** a drive level (a) and a voltage angle ($\delta_U$) are calculated as polar components from the normalized steady-state stator voltage ($U_{Sstat}$).

5. Method according to Claims 2 and 4,
**characterized in that** a fundamental terminal flux magnitude is calculated as a function of the measured intermediate-circuit voltage ($U_D$) of the calculated stator angular frequency ($\omega_S$) from the drive level (a) using the following equation:

$$|\underline{\Psi}_K| = \frac{a \cdot U_D \cdot \dfrac{2}{\pi}}{\omega_s}$$

**6.** Method according to Claims 2 and 4, **characterized in that** a continuous terminal flux nominal angle ($Y_{\Psi Knom}$) is calculated as a function of a determined continuous rotor flux angle ($Y_{\Psi R}$) and of a determined angle ($\delta_{\Psi K}$) between the terminal flux ($\Psi_K$) and the rotor flux ($\Psi_R$) using the following equation:

$$\gamma_{\Psi Knom} = \gamma_{\Psi R} + \delta_{\Psi K}$$

**7.** Method according to Claim 4,
**characterized in that** the polar component comprising the voltage angle ($\delta_U$) of the normalized steady-state stator voltage component ($\underline{u}_{Sdstead}$) is calculated using the following equation:

$$\delta_U = \arcsin \frac{U_{Sdstead}}{a \cdot U_D \cdot 2/\pi} + 90°$$

**8.** Method according to Claim 7,
**characterized in that** the angle ($\delta_{\Psi K}$) between the terminal flux ($\Psi_K$) and the rotor flux ($\Psi_R$) is calculated using the following equation:

$$\delta_{\Psi K} = \delta_u - 90° = \arcsin \frac{U_{sdstead}}{a \cdot U_D \cdot 2/\pi}$$

**Revendications**

**1.** Procédé pour appliquer de manière commandée une valeur ( $\underline{I}_{Ssoll}$ ) de consigne de courant statorique et une valeur ( $M_{soll}$ ) de consigne de couple de rotation pour un générateur ( 4 ) à induction alimenté par convertisseur, dans lequel, en fonction d'une valeur ( $\Psi_{Rsoll}$ ) de consigne de flux rotorique déterminée à l'avance et d'une valeur ( $\Psi_R$ ) réelle de flux rotorique déterminée, une composante ( $I_{Sdsoll}$ ) de courant formant le champ de la valeur ( $\underline{I}_{Ssoll}$ ) de consigne de courant statorique et en fonction d'une valeur ( $M_{Soll}$ ) de consigne de couple de rotation déterminée à l'avance, de la valeur ( $\Psi_R$ ) réelle de flux rotorique déterminée et d'une composante ( $I_{Sq}$ ) de courant déterminée formant le couple de rotation d'un courant ( $I_S$ ) statorique mesuré, on calcule une composante ( $I_{Sqsoll}$ ) de courant formant le couple de la valeur ( $\underline{I}_{Ssoll}$ ) de consigne de courant statorique, dans lequel en fonction d'une fréquence

( $\omega_R$ ) de glissement rotorique déterminée et d'une fréquence ( $\omega$ ) angulaire, on détermine une valeur ( $\omega_S$ ) réelle de fréquence angulaire statorique, dans lequel à partir de ces valeurs ( $I_{Sdsoll}$. $I_{Sqsoll}$, $\omega_S$, $\Psi_R$ ) calculées, on calcule en fonction des paramètres inductance ( $L_\sigma$ ) de fuite qui dépend de la fréquence et résistance ( $R_S$ ) statorique, comme grandeur de réglage, l'intégrale de la tension ( $\Psi_{KSoll}$ ) statorique, dont on déduit une courbe de trajectoire de flux choisie parmi des courbes de trajectoire de flux mémorisées et optimisées off-line.

2. Procédé suivant la revendication 1,
   **caractérisé en ce qu'**en fonction des composantes ( $I_{Sdsoll}$. $I_{sqsoll}$ ) de courant calculées, des paramètres inductance ( $L_\sigma$ ) de fuite qui dépend de la fréquence et de la résistance ( $R_S$ ) statorique, de la fréquence ( $\omega_S$ ) angulaire statorique et de la valeur ( $\Psi_R$ ) réelle de flux rotorique, on calcule une tension ( $u_{Sstat}$ ) statorique fixe normée que l'on norme au moyen d'une tension ( $U_D$ ) mesurée de circuit intermédiaire.

3. Procédé suivant l'une des revendications précédentes, **caractérisé en ce que**, pour la détermination d'une valeur ( $\underline{\Psi}_K$ ) réelle de flux aux bornes avant l'intégration de la tension ( $\underline{U}_S$ ) statorique, on soustrait de celle-ci une chute de tension sur la résistance ( $R_S$ ) statorique provoquée par le courant ( $I_S$ ) statorique instantané, et après l'intégration après transformation dans un système de coordonnées synchrone au flux rotorique, on additionne une chute de tension sur la résistance ( $R_S$ ) statorique, provoquée par la valeur ( $I_{Ssoll}$ ) de courant statorique appliquée, divisée par la fréquence $\omega_S$ angulaire statorique.

4. Procédé suivant la revendication 2,
   **caractérisé en ce que** l'on calcule un degré (a) de modulation et un angle ( $\delta_U$ ) de tension en tant que composantes polaire à partir de la tension ( $\underline{u}_{Sstat}$ ) statorique fixe normée.

5. Procédé suivant les revendications 2 et 4,
   **caractérisé en ce qu'**en fonction de la tension ( $U_D$ ) angulaire intermédiaire mesurée de la fréquence ( $\omega_S$ ) angulaire statorique calculée, on calcule une contribution au flux aux bornes d'oscillation fondamentale à partir du degré ( a ) de modulation selon l'équation suivants :

$$|\underline{\Psi}_K| = \frac{a \cdot U_D \cdot \dfrac{2}{\pi}}{\omega_S}$$

6. Procédé suivant les revendications 2 et 4,
   **caractérisé en ce qu'**en fonction d'un angle ( $\gamma\Psi_R$ ) de flux rotorique courant déterminé et d'un angle ( $\delta\Psi_K$ ) déterminé entre le flux ( $\Psi_K$ ) aux bornes et le flux ( $\Psi_R$ ) rotorique, on calcule un angle ( $\gamma_{\Psi KSoll}$ ) de consigne de flux aux bornes courant selon l'équation suivants :

$$\gamma\Psi_{Ksoll} = \gamma\Psi_R + \delta\Psi_K$$

7. Procédé suivant la revendication 4,
   **caractérisé en ce que** l'on calcule la composante polaire angle ( $\delta_U$ ) de tension de la composante ( $\underline{u}_{Ssdstat}$ ) de tension statorique fixe normée selon l'équation suivants :

$$\delta_U = \arcsin \frac{U_{Sstat}}{a \cdot U_D \cdot 2/\pi} + 90°$$

8. Procédé suivant la revendication 7,
   **caractérisé en ce que** l'on calcule l'angle ( $\delta\Psi_K$ ) entre le flux ( $\Psi_K$ ) aux bornes et le flux ( $\Psi_R$ ) rotorique selon l'équation suivants :

$$\delta_{\Psi K} = \delta_{U} - 90° = \arcsin \frac{U_{xdist}}{a \cdot U_{D} \cdot 2/\pi}$$

$$\delta_{\Psi K} = \delta_{U} - 90° = \arcsin \frac{U_{xdist}}{a \cdot U_{D} \cdot 2/\pi}$$

FIG 1

FIG 2

## FIG 3

## FIG 5

FIG 4

$$U_{Sddyn} = \frac{d\Psi_{Sd}}{dt} \Rightarrow \frac{d\Psi_{Sd}}{T_A}$$

$$U_{Sddyn} = \frac{d\Psi_{Sq}}{dt} \Rightarrow \frac{\Delta\Psi_{Sq}}{T_A}$$

EP 1 652 289 B1

FIG 6

## FIG 7

## FIG 8

FIG 9

FIG 10

FIG 11

EP 1 652 289 B1

# FIG 12

$$R_S \cdot I_{S\alpha}$$

$$U_{S\alpha} \xrightarrow{+} \ominus \xrightarrow{-} \boxed{\diagup} \xrightarrow{\Psi_{S\alpha}} \boxed{\begin{array}{l} \alpha, \beta \\ \diagup \\ d,q \end{array}}^{52}$$

$$R_S \cdot I_{Sdsoll}$$

$$\xrightarrow{\Psi_{Sq}} \otimes \xleftarrow{1/\omega_S}$$

$$\xrightarrow{+} \ominus \xrightarrow{\Psi_{Kq}} \boxed{\begin{array}{l} d,q \\ \diagup \\ \alpha, \beta \end{array}}^{54} \xrightarrow{\Psi_{K\alpha}}$$

$$R_S \cdot I_{S\beta}$$

$$U_{S\beta} \xrightarrow{+} \ominus \xrightarrow{-} \boxed{\diagup} \xrightarrow{\Psi_{S\beta}}$$

$$R_S \cdot I_{Sdsoll}$$

$$\xrightarrow{\Psi_{Sd}} \otimes \xleftarrow{1/\omega_S}$$

$$\xrightarrow{+} \ominus \xrightarrow{\Psi_{Kd}} \xrightarrow{\Psi_{K\beta}}$$

# FIG 14

$$\omega_S = \text{konst}$$

$$\Delta S$$

$$S_0$$

$$\Psi_{KschwVB}$$

$$\Psi_{Kschw.red} = k_{schw} \cdot \Psi_{KschwVB}$$

FIG 13

FIG 15

$\omega_S = \text{konst}$

$\Delta S$    $S_0$

$\Psi_{KSchwred}$    $\Psi_{KSchw}$

FIG 16

$\omega_S = \text{konst}$

$\Delta S$    $S_0$

$\Psi_{KschwVB}$

$$\Psi_{Kschw.red} = k_{schw} \cdot \Psi_{KschwVB}$$

FIG 17

EP 1 652 289 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Die stromrichternahe Antriebsregelung des Steuergerätes für Bahnautomatisierungssysteme SIBAS 32. *DE-Zeitschrift ''eb - Elektrische Bahnen'',* 1992, vol. 90, 344-350
- Direkte Selbstregelung (DSR) für hochdynamische Drehfeldantriebe mit Stromrichterspeisung. *DE-Zeitschrift ''etzArchiv'',* 1985, vol. 7, 211-218
- Direkte Drehmomentregelung von Drehstromantrieben. *DE-Zeitschrift ''ABB Technik'',* 1995, 19-24
- Direkte Selbstregelung, ein neuartiges Regelverfahren für Traktionsantriebe im Ersteinsatz bei dieselelektrischen Lokomotiven. *DE-Zeitschrift ''eb - Elektrische Bahnen'',* 1991, vol. 89, 79-87